# EUROPEAN PATENT SPECIFICATION

(11) **EP 4 542 456 B1**
(45) Date of publication and mention of the grant of the patent: **21.10.2026**
(21) Application number: 23931186.3
(22) Date of filing: 22.11.2023
(51) Int. Cl.: G06N 10/80, G06N 10/70, G06N 10/20, G06F 9/50, G06N 10/40

(54) **QUANTUM HARDWARE RESOURCE VIRTUALIZATION METHOD AND APPARATUS, AND COMPUTER DEVICE AND STORAGE MEDIUM**
VERFAHREN UND VORRICHTUNG ZUR VIRTUALISIERUNG VON QUANTENHARDWARERESSOURCEN SOWIE COMPUTERVORRICHTUNG UND SPEICHERMEDIUM
PROCÉDÉ ET APPAREIL DE VIRTUALISATION DE RESSOURCES DE MATÉRIEL QUANTIQUE, DISPOSITIF INFORMATIQUE ET SUPPORT DE STOCKAGE

(30) Priority: 30.08.2023 CN 202311105603
(43) Date of publication of application: 23.04.2025
(73) Proprietor: Tencent Technology (Shenzhen) Company Limited, Shenzhen, Guangdong 518057 (CN)
(72) Inventor: ZHANG, Tianyu, Shenzhen, Guangdong 518057 (CN); XU, Xiong, Shenzhen, Guangdong 518057 (CN); ZHENG, Yicong, Shenzhen, Guangdong 518057 (CN); ZHANG, Shengyu, Shenzhen, Guangdong 518057 (CN)
(74) Representative: Gunzelmann, Rainer
(86) International application number: PCT/CN2023/133182
(87) International publication number: WO 2025/043900

(56) References cited:
- WO-A1-2020/081805
- CN-A- 112 529 202
- CN-A- 115 204 399
- CN-A- 115 705 496
- CN-A- 115 705 498
- CN-A- 115 730 663
- CN-A- 116 362 340
- US-A1- 2020 174 836
- ASH-SAKI ABDULLAH ASH SAKI@PSU EDU ET AL: "QURE Qubit Re-allocation in Noisy Intermediate-Scale Quantum Computers", DESIGNING INTERACTIVE SYSTEMS CONFERENCE, ACM, 2 PENN PLAZA, SUITE 701NEW YORKNY10121-0701USA, 2 June 2019 (2019-06-02), pages 1 - 6, XP058637414, ISBN: 978-1-4503-5850-7, DOI: 10.1145/3316781.3317888
- SIYUAN NIU ET AL: "Enabling Multi-programming Mechanism for Quantum Computing in the NISQ Era", ARXIV.ORG, CORNELL UNIVERSITY LIBRARY, 201 OLIN LIBRARY CORNELL UNIVERSITY ITHACA, NY 14853, 10 February 2023 (2023-02-10), XP091434989
- LIU LEI ET AL: "QuCloud: A New Qubit Mapping Mechanism for Multi-programming Quantum Computing in Cloud Environment", 2021 IEEE INTERNATIONAL SYMPOSIUM ON HIGH-PERFORMANCE COMPUTER ARCHITECTURE (HPCA), IEEE, 27 February 2021 (2021-02-27), pages 167 - 178, XP033905752, DOI: 10.1109/HPCA51647.2021.00024

## Description

### RELATED APPLICATION

This application claims priority to Chinese Patent Application No. 2023111056033, filed with the China National Intellectual Property Administration on August 30, 2023 and entitled "METHOD AND APPARATUS FOR VIRTUALIZING QUANTUM HARDWARE RESOURCE, ELECTRONIC DEVICE, AND STORAGE MEDIUM".

### FIELD OF THE TECHNOLOGY

The present disclosure relates to the field of quantum technologies, and in particular, to a method and apparatus for virtualizing a quantum hardware resource, an electronic device, and a storage medium.

### BACKGROUND OF THE DISCLOSURE

In quantum hardware, a qubit cell is used as a basic unit to store a qubit and complete quantum computing. During multitasking, to simultaneously perform a plurality of tasks, often similar to classical computing, a quantum chip needs to be divided into a plurality of virtual machines or a plurality of processes are simultaneously run to perform the plurality of tasks. The quantum computing is different from the classical computing. Operation of the quantum computing is often inseparable from a qubit cell network that supports underlying operation of the quantum computing. Any virtualized network structure of the qubit cell may be insufficient to support required quantum operation. Therefore, an underlying quantum hardware resource often cannot be arbitrarily virtualized.

The quantum hardware resource in the related art is generally virtualized in a manner of simple physical segmentation. For example, the quantum hardware resource is divided into two, namely a virtualized quantum hardware resource A and a virtualized quantum hardware resource B. The virtualized quantum hardware resource A is started when a task 1 is executed, and the virtualized quantum hardware resource B is started when a task 2 is executed. Such a simple segmentation manner may result in a waste of the quantum hardware resource, or may not guarantee that an allocated virtualized quantum hardware resource can accurately perform a quantum task.

The disadvantage of the related art is that the quantum hardware resource has a low resource utilization rate and an operation accuracy is difficult to guarantee.

Document ASH-SAKI ABDULLAH ASH SAKI@PSU EDU ET AL: "QURE Qubit Re-allocation in Noisy Intermediate-Scale Quantum Computers", DESIGNING INTERACTIVE SYSTEMS CONFERENCE, ACM, 2 PENN PLAZA, SUITE 701NEW YORKNY10121-0701USA, 2 June 2019, proposes Qubit Re-allocation (QURE) to maximize the sequence fidelity of a given workload.

Document SIYUAN NIU ET AL: "Enabling Multi-programming Mechanism for Quantum Computing in the NISQ Era", ARXIV.ORG, CORNELL UNIVERSITY LIBRARY, 201 OLIN LIBRARY CORNELL UNIVERSITY ITHACA, NY 14853, 10 February 2023, proposes a Quantum Multi-programming Compiler (QuMC) to execute multiple quantum circuits on quantum hardware simultaneously.

Document LIU LEI ET AL: "QuCloud: A New Qubit Mapping Mechanism for Multi-programming Quantum Computing in Cloud Environment", 2021 IEEE INTERNATIONAL SYMPOSIUM ON HIGH-PERFORMANCE COMPUTER ARCHITECTURE (HPCA), IEEE, 27 February 2021, proposes a QuCloud method for mapping quantum programs in the cloud environment.

### SUMMARY

The invention is set out in the appended set of claims. Embodiments of the present disclosure provide a method and apparatus for virtualizing a quantum hardware resource, an electronic device, and a storage medium, so as to increase a utilization rate of virtualized resources and further ensure a relatively high operation accuracy.

According to an aspect of the present disclosure, a method for virtualizing a quantum hardware resource is provided according to claim 1. Optional features are set out in dependent claims 2 to 10.

According to an aspect of the present disclosure, an electronic device is provided according to claim 11.

According to an aspect of the present disclosure, a computer-readable storage medium is provided according to claim 12.

According to an aspect of the present disclosure, a computer program product is provided according to claim 13.

In the embodiments of the present disclosure, when the quantum hardware resource is required to perform the quantum computing task, the target qubit cell topology is first determined based on the quantum computing task, and then the plurality of candidate qubit cell subnetworks conforming to the target qubit cell topology are obtained from the qubit cell network of the quantum hardware resource. The plurality of candidate qubit cell subnetworks conforming to the target qubit cell topology are obtained from the qubit cell network of the quantum hardware resource. Any of the plurality of candidate qubit cell subnetworks can be used as a network that performs the quantum computing task, and a topological structure of the candidate qubit cell subnetwork is relatively reasonable, so as to improve adaptability of the virtualized quantum hardware resource and the quantum computing task, thereby increasing the utilization rate of the quantum hardware resource. Then the overall operation fidelity of each candidate qubit cell subnetwork is determined based on the self-operation fidelity of each qubit cell in each candidate qubit cell subnetwork and the mutual operation fidelity between adjacent qubit cells, and the target qubit cell subnetwork is determined, based on the overall operation fidelity of each of the plurality of candidate qubit cell subnetworks, as the virtualized resource for the target quantum computing task. In this way, the target qubit cell subnetwork has a relatively high overall operation fidelity, so as to ensure the operation accuracy of the target qubit cell subnetwork in performing the quantum computing task. Based on the above, according to the embodiments of the present disclosure, the adaptability of the virtualized quantum hardware resource and the quantum computing task can be improved, thereby increasing the utilization rate of the quantum hardware resource, and further ensuring a relatively high operation accuracy of the quantum computing task.

Objectives and other advantages of the present disclosure may be implemented and obtained by using structures particularly pointed out in the specification, claims, and accompanying drawings.

### BRIEF DESCRIPTION OF THE DRAWINGS

The accompanying drawings are intended to provide a further understanding of technical solutions of the present disclosure, and constitute a part of this specification. The accompanying drawings and embodiments of the present disclosure are used together for explaining the technical solutions of the present disclosure rather than constituting a limitation on the technical solutions of the present disclosure.
FIG. 1 is an architecture diagram of a quantum computing system to which a method for virtualizing a quantum hardware resource according to an embodiment of the present disclosure is applied.
FIG. 2A to FIG. 2D are schematic diagrams of an embodiment of the present disclosure applied in a quantum hardware resource virtualization scenario.
FIG. 3 is a flowchart of a method for virtualizing a quantum hardware resource according to an embodiment of the present disclosure.
FIG. 4A to FIG. 4D are schematic diagrams of operation 310 regarding target qubit cell topologies in FIG. 3.
FIG. 5 is a flowchart of operation 310 regarding a target qubit cell topology being a universal qubit cell topology in FIG. 3.
FIG. 6 is a schematic diagram of a specific implementation of generalizing a universal qubit cell topology from a plurality of sample quantum computing tasks.
FIG. 7 is a flowchart of operation 320 of obtaining a qubit cell network in FIG. 3.
FIG. 8A to FIG. 8C are schematic diagrams of a specific implementation of obtaining a qubit cell network.
FIG. 9 is a flowchart of operation 330 of obtaining a plurality of candidate qubit cell subnetworks in FIG. 3.
FIG. 10 is a schematic diagram of a specific implementation of obtaining a plurality of candidate qubit cell subnetworks.
FIG. 11 is a flowchart of operation 340 of obtaining an overall operation fidelity in FIG. 3.
FIG. 12 is a schematic diagram of a specific implementation of obtaining an overall operation fidelity.
FIG. 13 is a flowchart of operation 350 of determining a target qubit cell subnetwork by using an overall failure rate in FIG. 3.
FIG. 14 is a schematic diagram of a specific implementation of determining a target qubit cell subnetwork by using an overall failure rate.
FIG. 15 is a flowchart of operation 350 of determining a target qubit cell subnetwork by using an importance degree in FIG. 3.
FIG. 16 is a schematic diagram of a specific implementation of determining a target qubit cell subnetwork by using an importance degree.
FIG. 17 is a flowchart of operation 350 of determining a target qubit cell subnetwork for a second quantity of target quantum computing tasks in FIG. 3.
FIG. 18 is a schematic diagram of a specific implementation of determining a target qubit cell subnetwork for a second quantity of target quantum computing tasks.
FIG. 19 is a flowchart of operation 350 of determining a target qubit cell subnetwork for a second quantity of associated target quantum computing tasks in FIG. 3.
FIG. 20A to FIG. 20C are schematic diagrams of a specific implementation of determining a target qubit cell subnetwork for a second quantity of associated target quantum computing tasks.
FIG. 21 is a diagram showing details of a specific implementation of a method for virtualizing a quantum hardware resource according to an embodiment of the present disclosure.
FIG. 22 is a block diagram of an apparatus for virtualizing a quantum hardware resource according to an embodiment of the present disclosure.
FIG. 23 is a structure diagram of a terminal that performs a typesetting method shown in FIG. 3 according to an embodiment of the present disclosure.
FIG. 24 is a structure diagram of a server that performs a typesetting method shown in FIG. 3 according to an embodiment of the present disclosure.

### DESCRIPTION OF EMBODIMENTS

To make objectives, technical solutions, and advantages of the present disclosure more apparent and clearer, the following describes the present disclosure in further detail with reference to the accompanying drawings and embodiments. Specific embodiments described herein are merely used for explaining the present disclosure, but are not intended to limit the present disclosure.

Before the embodiments of the present disclosure are further described in detail, terms involved in the embodiments of the present disclosure are described. The terms involved in the embodiments of the present disclosure are applicable to the following explanation.

Quantum computing: It is a calculation method using principles of quantum mechanics. A biggest difference between the quantum computing and conventional computing is that the quantum computing uses a qubit rather than a conventional binary bit for computing. The qubit has different properties from the conventional binary bit. The most important property is that the qubit may be in a plurality of states simultaneously. Just because a qubit can represent two states simultaneously to carry more information than a binary bit, and more data operations can be performed with qubit cells than with a same quantity of binary bit cells, the quantum computing greatly increases a processing speed of a computer.

Quantum: A quantum in the "quantum computing" refers to a smallest discrete unit used by a system to calculate an output.

Qubit: It is a basic unit of information in quantum computing. The qubit plays a similar role in the quantum computing as a bit in conventional computing, but they behave much differently. A classical binary bit can only store a 0 or 1, and a qubit can store a superposition of all possible states, namely a superposition state of a state |0> and a state |1>. Therefore, the processing speed of the computer is greatly increased.

Qubit cell: It is a storage unit in a quantum hardware resource for accommodating qubits participating in operations.

### Description of system architecture and scenario applied in the embodiments of the present disclosure

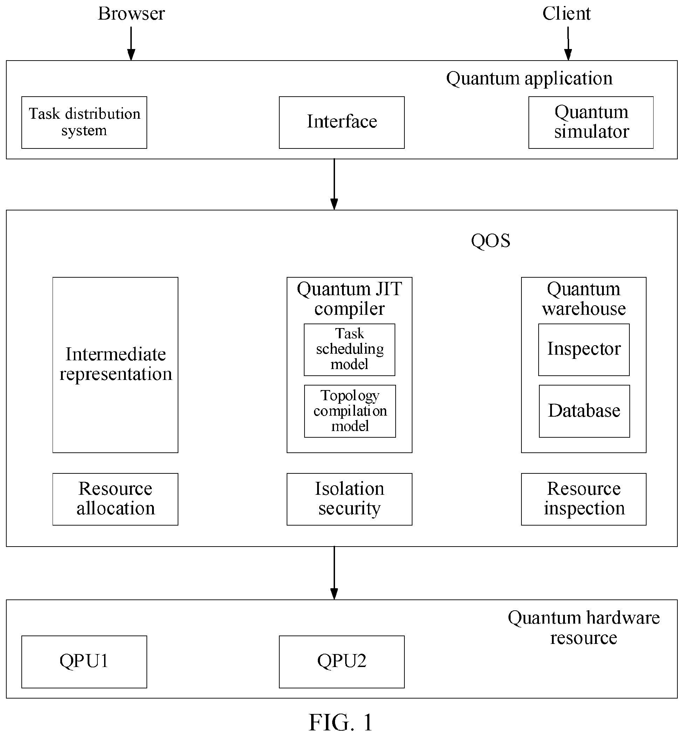

FIG. 1 is an architecture diagram of a quantum computing system to which a method for virtualizing a quantum hardware resource according to an embodiment of the present disclosure is applied. The quantum computing system includes a browser, a client, a quantum application, a quantum operating system (QOS), a quantum hardware resource, and the like.

The browser and the client are executable programs configured to generate quantum computing tasks. The browser and the client are generally run on a terminal. The terminal includes terminal devices such as a desktop computer, a notebook computer, a tablet computer, a personal digital assistant (PDA), a mobile phone, and an on-board terminal in a plurality of forms.

The quantum application is deployed on the QOS. An interface (API) in the quantum application is configured to receive a quantum computing task. A task distribution system in the quantum application is configured to distribute the quantum computing task to the QOS. A quantum simulator in the quantum application may simulate quantum computing of a task.

The QOS is generally deployed in the cloud. The QOS is generally installed on the quantum hardware resource. The QOS includes an intermediate representation, a quantum just-in-time (JIT) compiler, a quantum warehouse, resource allocation, isolation security, and resource inspection. The intermediate representation serves as a universal interface between the quantum application and the QOS, and may serve as an abstract representation of the quantum computing task. The quantum JIT compiler includes a task scheduling model and a topology compilation model. The task scheduling model is configured to perform task scheduling. The topology compilation model is configured to compile a scheduled task to obtain a qubit cell topology. The quantum warehouse includes an inspector and a database. The inspector is configured to check the quantum computing task. The database is configured to store data of the quantum computing task, for example, the qubit cell topology corresponding to the quantum computing task. The resource allocation is configured to allocate virtualized resources for quantum computing tasks. The isolation security serves as data isolation and data security between the QOS and the quantum hardware resource. The resource inspection is configured to inspect the quantum hardware resource for the quantum computing task.

The quantum hardware resource is a physical space where quantum computing is performed. The quantum hardware resource is generally deployed in the cloud. As shown in FIG. 1, the quantum hardware resource includes a quantum processing unit 1 (QPU1) and a quantum processing unit 2 (QPU2). The QPU is a relatively physically independent hardware block in the quantum hardware resource. A person skilled in the art needs to understand that the QPU1 and the QPU2 are only examples, and another quantity of QPUs may also be provided.

When the browser or the client generates a task and the task requires the quantum computing, the task is first delivered to the task scheduling model of the QOS through the task distribution system in the quantum application. A quantum simulator in the quantum application may simulate quantum computing of a task. In the QOS, a task is scheduled by the task scheduling model, and the task is compiled by the topology compilation model to obtain a qubit cell topology suitable for executing the task. A plurality of qubit cells are distributed in the quantum hardware resource. A connection is established between adjacent qubit cells through an action of a radio frequency (RF) beam to form an overall qubit cell network. The quantum hardware resource is virtualized to obtain a virtualized resource for the quantum computing task.

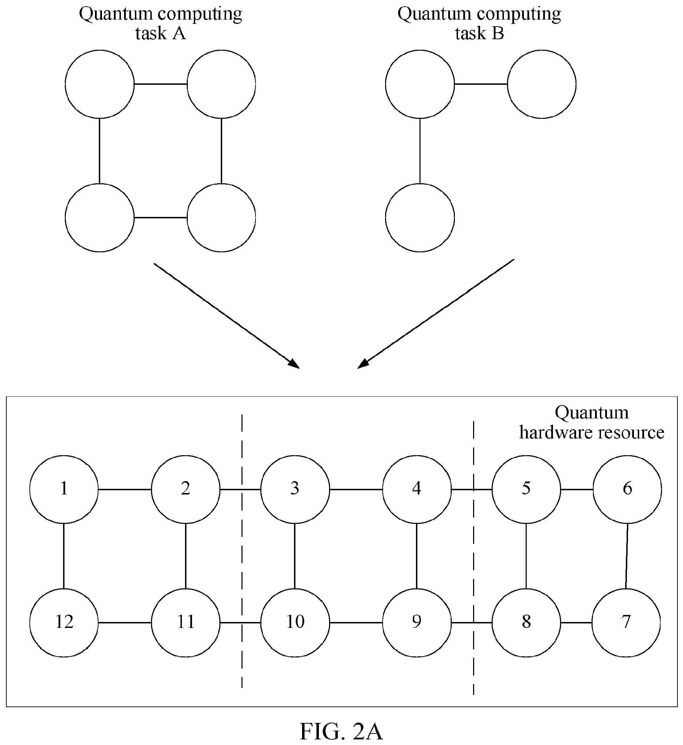

This embodiment of the present disclosure may be applied in various scenarios, such as a quantum hardware resource virtualization scenario shown in FIG. 2A to FIG. 2D.

As shown in FIG. 2A, if a quantum computing task A and a quantum computing task B require virtualized resources, the quantum hardware resource is virtualized. The quantum hardware resource includes 12 qubit cells. A connection relationship exists between a qubit cell 1 and a qubit cell 2. A connection relationship exists between a qubit cell 2 and a qubit cell 3. A connection relationship exists between a qubit cell 3 and a qubit cell 4. A connection relationship exists between a qubit cell 4 and a qubit cell 5. A connection relationship exists between a qubit cell 5 and a qubit cell 6. A connection relationship exists between a qubit cell 6 and a qubit cell 7. A connection relationship exists between a qubit cell 7 and a qubit cell 8. A connection relationship exists between a qubit cell 8 and a qubit cell 9. A connection relationship exists between a qubit cell 9 and a qubit cell 10. A connection relationship exists between a qubit cell 10 and a qubit cell 11. A connection relationship exists between a qubit cell 11 and a qubit cell 12. A connection relationship exists between a qubit cell 1 and a qubit cell 12. A connection relationship exists between a qubit cell 2 and a qubit cell 11. A connection relationship exists between a qubit cell 3 and a qubit cell 10. A connection relationship exists between a qubit cell 4 and a qubit cell 9. A connection relationship exists between a qubit cell 5 and a qubit cell 8.

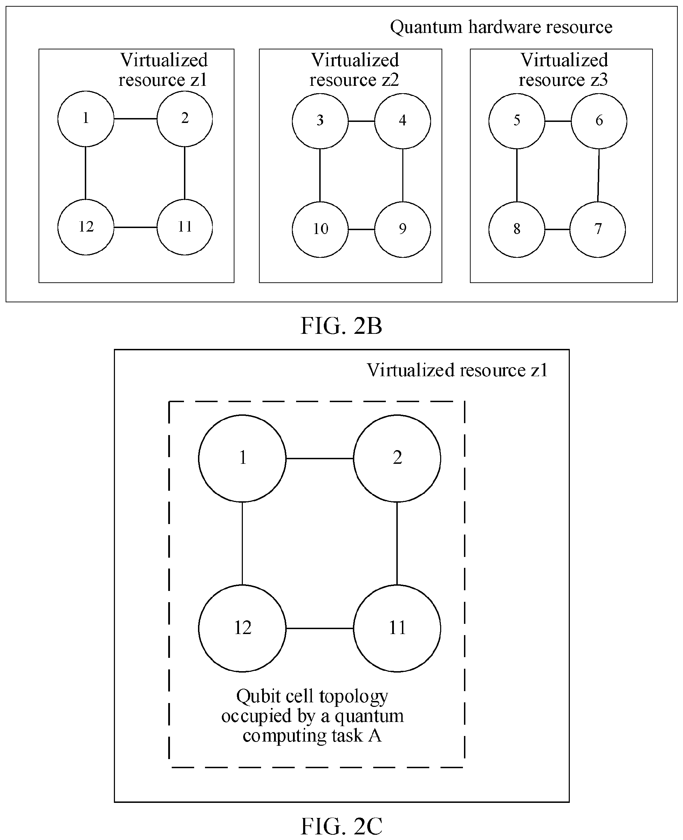

A qubit cell topology of the quantum computing task A is 4 qubit cells connected end to end, and a qubit cell topology of the quantum computing task B is 3 qubit cells connected in a single chain. The quantum hardware resource is partitioned based on the qubit cell topology of the 2 tasks. 2 dashed lines in FIG. 2A partition the overall quantum hardware resource into a virtualized resource z1, a virtualized resource z2, and a virtualized resource z3. The virtualized resource z1, the virtualized resource z2, and the virtualized resource z3 are shown in FIG. 2B.

In FIG. 2B, the virtualized resource z1 includes a total of 4 qubit cells, namely a qubit cell 1, a qubit cell 2, a qubit cell 11, and a qubit cell 12. The virtualized resource z2 includes a total of 4 qubit cells, namely a qubit cell 3, a qubit cell 4, a qubit cell 9, and a qubit cell 10. The virtualized resource z3 includes a total of 4 qubit cells, namely a qubit cell 5, a qubit cell 6, a qubit cell 7, and a qubit cell 8.

A difference between FIG. 2B and FIG. 2A is that no connection relationship exists between the qubit cell 2 and the qubit cell 3. No connection relationship exists between the qubit cell 4 and the qubit cell 5. No connection relationship exists between the qubit cell 8 and the qubit cell 9. No connection relationship exists between the qubit cell 10 and the qubit cell 11.

Assuming that an operation fidelity of the virtualized resource z1 is 0.9, an operation fidelity of the virtualized resource z2 is 0.8, and an operation fidelity of the virtualized resource z3 is 0.5, it is determined that the virtualized resource z1 processes the quantum computing task A, and it is determined that the virtualized resource z2 processes the quantum computing task B. In this way, the operation fidelity of the virtualized resource in processing the quantum computing task may be ensured.

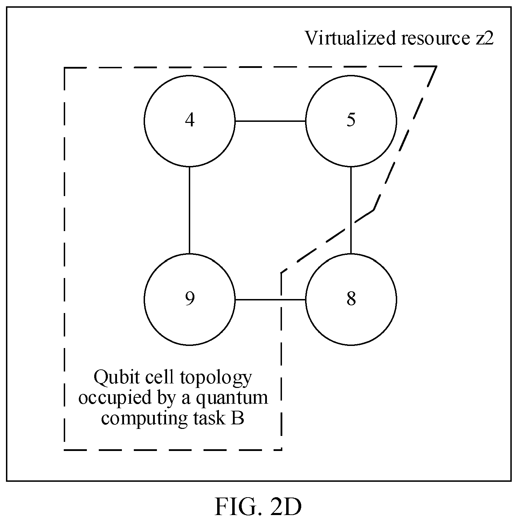

FIG. 2C shows that the virtualized resource z1 runs the quantum computing task A, and FIG. 2D shows that the virtualized resource z2 runs the quantum computing task B. The virtualized resource z3 may serve as another quantum computing task.

In FIG. 2C, when the virtualized resource z1 processes the quantum computing task A, the quantum computing task A occupies the qubit cell 1, the qubit cell 2, the qubit cell 11, and the qubit cell 12. The virtualized resource z1 is fully occupied and has a high resource utilization rate.

In FIG. 2D, when the virtualized resource z2 processes the quantum computing task B, the quantum computing task B occupies the qubit cell 4, the qubit cell 5, and the qubit cell 9, and the qubit cell 8 is left. In such a case, only 1 qubit cell is in an idle state, indicating that the resource utilization rate is also relatively high.

Based on the above, during virtualization of the quantum hardware resource in the embodiments of the present disclosure, the qubit cell topology of the quantum computing task is fully considered, thereby improving adaptability of the virtualized quantum hardware resource and the quantum computing task, and increasing the resource utilization rate. In addition, the operation fidelity of each partitioned virtualized resource is further considered, so that the virtualized quantum hardware resource for the quantum computing tasks has a relatively high operation accuracy.

### General description of the embodiments of the present disclosure

According to an embodiment of the present disclosure, a method for virtualizing a quantum hardware resource is provided.

The method for virtualizing a quantum hardware resource of the embodiments of the present disclosure may be performed on a server, or may be performed partially on a server and partially on a terminal.

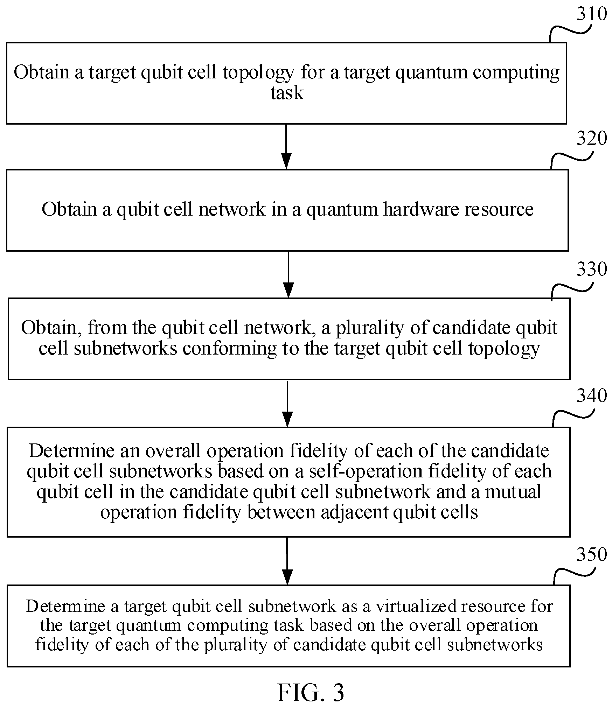

As shown in FIG. 3, according to an embodiment of the present disclosure, virtualization of the quantum hardware resource includes the following operations.

At 310: Obtain a target qubit cell topology for a target quantum computing task.

At 320: Obtain a qubit cell network in the quantum hardware resource. Here, when the quantum hardware resources include at least one quantum processing unit (QPU), the qubit cell network may be a QPU or a group of QPUs.

At 330: Obtain, from the qubit cell network, a plurality of candidate qubit cell subnetworks conforming to the target qubit cell topology.

At 340: Determine an overall operation fidelity of each candidate qubit cell subnetwork based on a self-operation fidelity of each qubit cell in each of the plurality of candidate qubit cell subnetworks and a mutual operation fidelity between adjacent qubit cells.

At 350: Determine a target qubit cell subnetwork based on the overall operation fidelity of each of the plurality of candidate qubit cell subnetworks, the target qubit cell subnetwork serving as a virtualized resource for the target quantum computing task.

The target qubit cell topology for the target quantum computing task and the qubit cell network in the quantum hardware resource are respectively obtained, and then the plurality of candidate qubit cell subnetworks conforming to the target qubit cell topology are obtained from the qubit cell network in the quantum hardware resource. The plurality of candidate qubit cell subnetworks conforming to the target qubit cell topology are obtained from the qubit cell network of the quantum hardware resource. Any of the plurality of candidate qubit cell subnetworks can be used as a network that performs the quantum computing task, and a topological structure of the candidate qubit cell subnetwork is relatively reasonable, so as to improve adaptability of the virtualized quantum hardware resource and the quantum computing task, thereby increasing the utilization rate of the quantum hardware resource. Then the overall operation fidelity of each candidate qubit cell subnetwork is determined based on the self-operation fidelity of each qubit cell in each candidate qubit cell subnetwork and the mutual operation fidelity between adjacent qubit cells, and the target qubit cell subnetwork is determined, based on the overall operation fidelity of each of the plurality of candidate qubit cell subnetworks, as the virtualized resource for the target quantum computing task. In this way, the target qubit cell subnetwork has a relatively high overall operation fidelity, so as to ensure the operation accuracy of the target qubit cell subnetwork in performing the quantum computing task. Based on the above, according to the embodiments of the present disclosure, the adaptability of the virtualized quantum hardware resource and the quantum computing task can be improved, thereby increasing the utilization rate of the quantum hardware resource, and further ensuring a relatively high operation accuracy of the quantum computing task.

A detailed description of operations 310-330 is provided below.

### Detailed description of operation 310

**In** operation 310, the target qubit cell topology for the target quantum computing task is obtained. The target quantum computing task refers to a task that can trigger a virtualization service of a quantum hardware resource. The target quantum computing task includes a plurality of quantum operations. The target qubit cell topology refers to a network structure composed of a plurality of qubit cells.

The plurality of quantum operations in the target quantum computing task can be converted into a gate operation on each qubit cell and a gate operation between every two adjacent qubit cells, so that the target qubit cell topology is obtained based on each qubit cell and the network structure formed by every two adjacent qubit cells. The target qubit cell topology includes the plurality of qubit cells and a connection relationship among the plurality of qubit cells.

The qubit can simultaneously represent two states, for example, "Schrodinger's cat" is "dead" and "alive", but the "Schrodinger's cat" is in a superposition of a state "dead" and a state "alive" before the box is opened. Because a qubit can represent two states simultaneously to carry more information than a binary bit, and more data operations can be performed with qubit cells than with a same quantity of binary bit cells, the state of a qubit is a superposition state of a state |0> and a state |1>. Probabilities of the two states are respectively α and β. Before the qubit is observed, α and β are uncertain values that vary randomly, but both the values satisfy "α²+β²=1". When the qubit is observed, the values of α and β are determined. Each qubit may use a plurality of different gate operations.

The gate operation is also referred to as a quantum gate operation or a quantum logic gate operation. Four typical gate operations include an I-gate operation, an X-gate operation, a Y-gate operation, and an H-gate operation. The gate operation herein is not completed by a gate device in the classical computing, but by applying different RF modulated signals to the qubit cell. Each RF modulated signal has different components. Each component has three variables, namely amplitude, frequency, and phase. Various gate operations can be completed by adjusting the three variables of different components. For example, the X-gate operation is swapping the probabilities of the states |0> and |1>. To be specific, the probability of the state |0> in the qubit cell is changed from α to β by adjusting three variables of different components of an RF signal, and the probability of the state |1> in the qubit cell is changed from β to α by adjusting the three variables of the different components of the RF signal. The H-gate operation is changing the probability of the state |0> from α to $\frac{1}{\sqrt{2}} α + \frac{1}{\sqrt{2}} β$ and the probability of the state |1> from β to $\frac{1}{\sqrt{2}} α + \frac{1}{\sqrt{2}} β$.

In an embodiment, operation 310 includes:
obtaining a quantum computing task of a task distribution system in a quantum application;
invoking a task scheduling model in a QOS to schedule the target quantum computing task to obtain a scheduled target quantum computing task, the target quantum computing task being any one of quantum computing tasks; and
invoking a topology compilation model to perform topology compilation on the scheduled target quantum computing task, to obtain the target qubit cell topology.

The quantum application and the QOS have been described in the system architecture above. Therefore, details are not described herein again.

An advantage of this embodiment is that collaboration between the quantum application and the QOS is fully used to improve flexibility and accuracy of obtaining the target qubit cell topology.

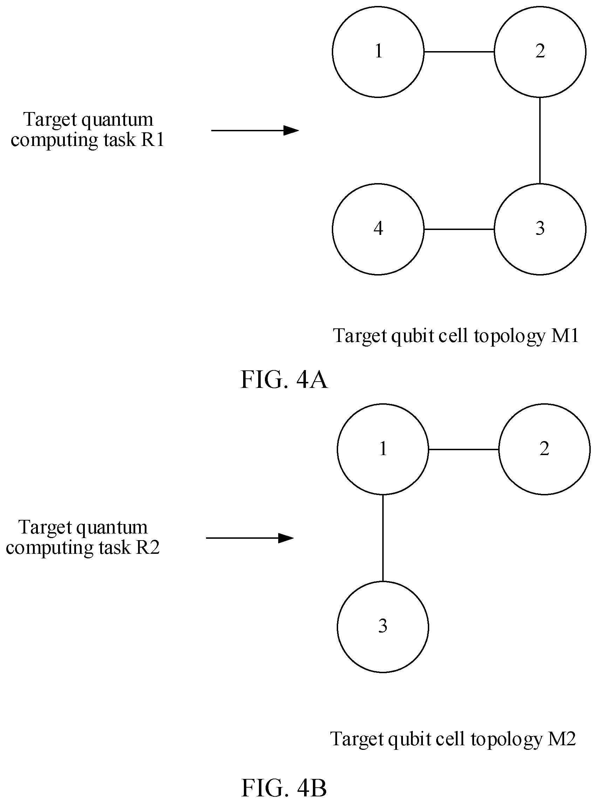

The target qubit cell topology is described in detail below with reference to FIG. 4A and FIG. 4B.

In an example, as shown in FIG. 4A, a target qubit cell topology M1 of a target quantum computing task R1 includes 4 qubit cells. Specifically, the target quantum computing task R1 includes 7 quantum computations. The 7 quantum computations can be converted into a gate operation of a qubit cell 1, a gate operation of a qubit cell 2, a gate operation of a qubit cell 3, a gate operation of a qubit cell 4, a gate operation between the qubit cell 1 and the qubit cell 2, a gate operation between the qubit cell 2 and the qubit cell 3, and a gate operation between the qubit cell 3 and the qubit cell 4. Then in the target qubit cell topology M1, a connection relationship exists between the qubit cell 1 and the qubit cell 2, a connection relationship exists between the qubit cell 2 and the qubit cell 3, and a connection relationship exists between the qubit cell 3 and the qubit cell 4.

In another example, as shown in FIG. 4B, a target qubit cell topology M2 of a target quantum computing task R2 includes 3 qubit cells. In the target qubit cell topology M2, a connection relationship exists between a qubit cell 1 and a qubit cell 2, and a connection relationship exists between the qubit cell 1 and a qubit cell 3.

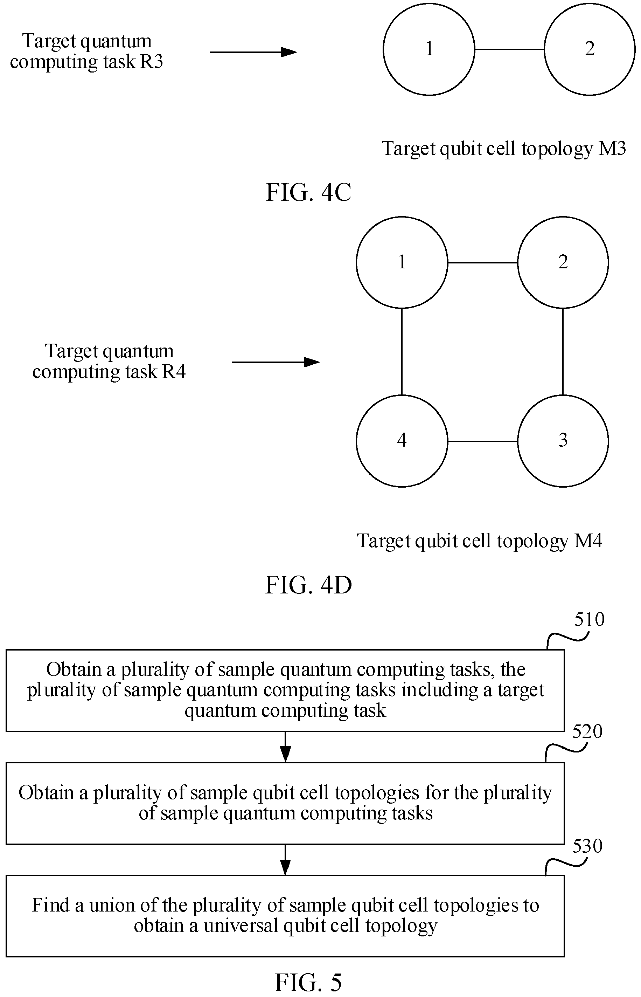

In another example, as shown in FIG. 4C, a target qubit cell topology M3 of a target quantum computing task R3 includes 2 qubit cells. In the target qubit cell topology M3, a connection relationship exists between a qubit cell 1 and a qubit cell 2.

In another example, as shown in FIG. 4D, a target qubit cell topology M4 of a target quantum computing task R4 includes 4 qubit cells. In the target qubit cell topology M4, a connection relationship exists between a qubit cell 1 and a qubit cell 2, a connection relationship exists between the qubit cell 2 and a qubit cell 3, a connection relationship exists between the qubit cell 3 and a qubit cell 4, and a connection relationship exists between the qubit cell 1 and the qubit cell 4.

It may be learned from the target qubit cell topologies shown in FIG. 4A to FIG. 4D that a quantity of qubit cells required for different target quantum computing tasks and the connection relationship between the qubit cells are generally different. The target qubit cell topology of a single target quantum computing task is non-universal and cannot be universally applicable to another target quantum computing task. In view of the above, in an embodiment, it is proposed that a universal topological form of a qubit cell network structure that can be basically applicable to most tasks is determined based on a form of the qubit cell network structure generally occupied by the quantum computing task.

Referring to FIG. 5, during specific implementation of the embodiment, the target qubit cell topology is a universal qubit cell topology. Operation 310 includes the following operations.

At 510: Obtain a plurality of sample quantum computing tasks, the plurality of sample quantum computing tasks including the target quantum computing task.

At 520: Obtain a plurality of sample qubit cell topologies for the plurality of sample quantum computing tasks.

At 530: Find a union of the plurality of sample qubit cell topologies to obtain the universal qubit cell topology.

A detailed description of operations 510-530 is provided below.

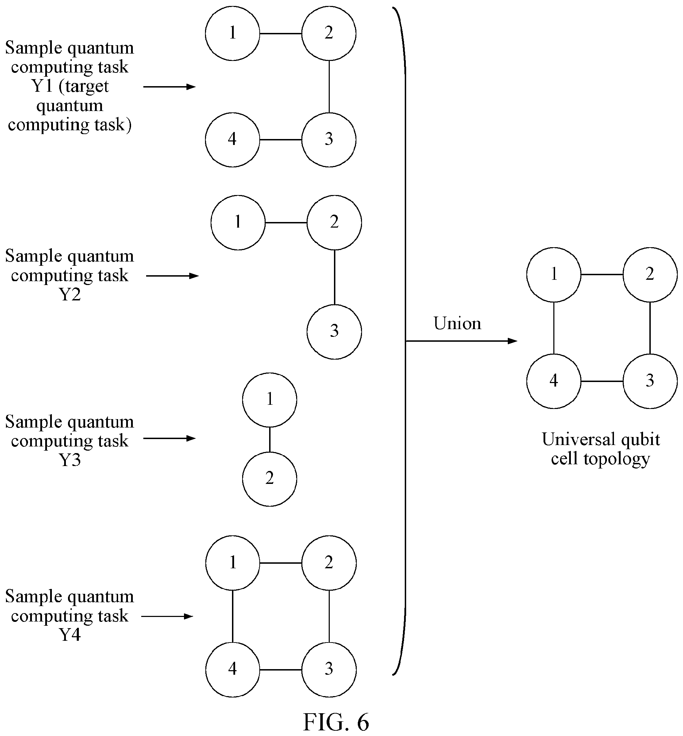

In operation 510, the sample quantum computing task is similar to the target quantum computing task, and also includes a plurality of quantum computations, and the sample quantum computing task also has a corresponding qubit cell topology. However, the target quantum computing task is used as a practical application for virtualization of a quantum hardware resource, and the sample quantum computing task is configured for generalizing the universal qubit cell topology. As shown in FIG. 6, there are 4 sample quantum computing tasks, namely a sample quantum computing task Y1, a sample quantum computing task Y2, a sample quantum computing task Y3, and a sample quantum computing task Y4. The sample quantum computing task Y1 is a target quantum computing task.

In operation 520, the sample qubit cell topology of the sample quantum computing task may be obtained by invoking a topology compilation model. Operation 520 is similar to a process of obtaining the target qubit cell topology for the target quantum computing task above. Details are not described herein again.

In operation 530, the plurality of sample qubit cell topologies are not the same. In fact, a quantity of qubit cells is different from the connection relationship between the qubit cells. Therefore, the universal qubit cell topology obtained by finding the union of the sample qubit cell topologies includes all of the qubit cells and all of the connection relationships.

In an example, as shown in FIG. 6, after the union is found based on the sample qubit cell topologies of the 4 sample quantum computing tasks, a universal qubit cell topology is obtained. Specifically, it may be learned from the sample qubit cell topologies of the sample quantum computing task Y1, the sample quantum computing task Y2, the sample quantum computing task Y3, and the sample quantum computing task Y4 that the sample qubit cells involved include a total of 4 sample qubit cells, namely a sample qubit cell 1, a sample qubit cell 2, a sample qubit cell 3, and a sample qubit cell 4. It may be further learned that a connection relationship exists between the sample qubit cell 1 and the sample qubit cell 2, a connection relationship exists between the sample qubit cell 2 and the sample qubit cell 3, and a connection relationship exists between the sample qubit cell 3 and the sample qubit cell 4. Finally, the universal qubit cell topology shown on the right side of FIG. 6 is obtained. Then in practical use, if the qubit cell topology of a certain target quantum computing task is the same as any one of the sample quantum computing tasks Y1, Y2, Y3, and Y4, the universal qubit cell topology is applicable to computation of the target quantum computing task.

An advantage of the embodiment is that a universal qubit cell topology may be generalized based on the plurality of sample quantum computing tasks. The universal qubit cell topology is applicable to different target quantum computing tasks. In this way, a rate and an accuracy of obtaining the target qubit cell topology are improved.

### Detailed description of operation 320

In operation 320, the qubit cell network in the quantum hardware resource is obtained. The qubit cell network refers to a network that is composed of a plurality of qubit cells and can serve as a virtualized resource for a quantum computing task. The qubit cell network includes original qubit cells and a first connection relationship between the original qubit cells. In fact, the original qubit cells in the qubit cell network may be occupied by another quantum computing task, and the original qubit cell that has been occupied cannot participate in processing of a target quantum computing task. Therefore, in an embodiment, the occupied qubit cell needs to be deleted from the qubit cell network.

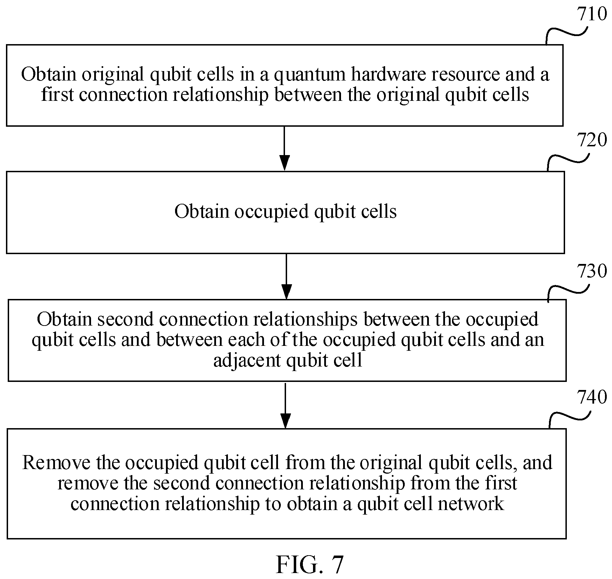

Referring to FIG. 7, during specific implementation of the embodiment, operation 320 includes the following operations.

At 710: Obtain original qubit cells in the quantum hardware resource and a first connection relationship between the original qubit cells.

At 720: Obtain occupied qubit cells.

At 730: Obtain second connection relationships between the occupied qubit cells and between each of the occupied qubit cells and an adjacent qubit cell.

At 740: Remove the occupied qubit cell from the original qubit cells, and remove the second connection relationship from the first connection relationship to obtain the qubit cell network, the qubit cells included in the qubit cell network being not occupied.

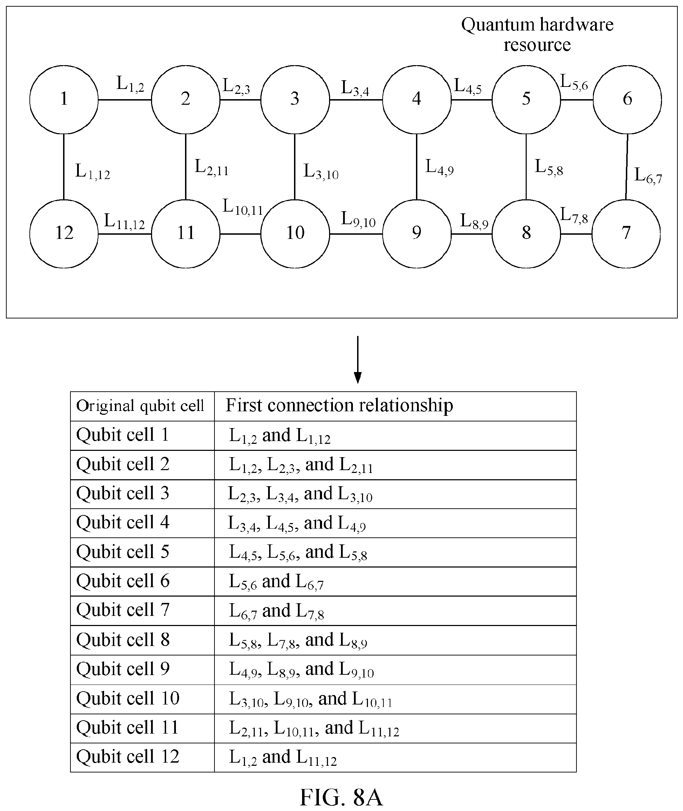

In operation 710, as shown in FIG. 8A, the original qubit cells in the quantum hardware resource include a total of 12 original qubit cells, namely {a qubit cell 1, a qubit cell 2, a qubit cell 3, a qubit cell 4, a qubit cell 5, a qubit cell 6, a qubit cell 7, a qubit cell 8, a qubit cell 9, a qubit cell 10, a qubit cell 11, and a qubit cell 12}. A first connection relationship between the original qubit cells includes a total of 16 first connection relationships, namely {a first connection relationship L_{1,2}, a first connection relationship L_{2,3}, a first connection relationship L_{3,4}, a first connection relationship L_{4,5}, a first connection relationship L_{5,6}, a first connection relationship L_{6,7}, a first connection relationship L_{7,8}, a first connection relationship L_{8,9}, a first connection relationship L_{9,10}, a first connection relationship L_{10,11}, a first connection relationship L_{11,12}, a first connection relationship L_{1,12}, a first connection relationship L_{2,11}, a first connection relationship L_{3,10}, a first connection relationship L_{4,9}, and a first connection relationship L_{5,8}}.

Still as shown in FIG. 8A, the first connection relationship corresponding to the qubit cell 1 includes the first connection relationship L_{1,2} and the first connection relationship L_{1,12}. The first connection relationship corresponding to the qubit cell 2 includes the first connection relationship L_{1,2}, the first connection relationship L_{2,3}, and the first connection relationship L_{2,11}. The first connection relationship corresponding to the qubit cell 3 includes the first connection relationship L_{2,3}, the first connection relationship L_{3,4}, and the first connection relationship L_{3,10}. The first connection relationship corresponding to the qubit cell 4 includes the first connection relationship L_{3,4}, the first connection relationship L_{4,5}, and the first connection relationship L_{4,9}. The first connection relationship corresponding to the qubit cell 5 includes the first connection relationship L_{4,5}, the first connection relationship L_{5,6}, and the first connection relationship L_{5,8}. The first connection relationship corresponding to the qubit cell 6 includes the first connection relationship L_{5,6} and the first connection relationship L_{6,7}. The first connection relationship corresponding to the qubit cell 7 includes the first connection relationship L_{6,7} and the first connection relationship L_{7,8}. The first connection relationship corresponding to the qubit cell 8 includes the first connection relationship L_{5,8}, the first connection relationship L_{7,8}, and the first connection relationship L_{8,9}. The first connection relationship corresponding to the qubit cell 9 includes the first connection relationship L_{4,9}, the first connection relationship L_{8,9}, and the first connection relationship L_{9,10}. The first connection relationship corresponding to the qubit cell 10 includes the first connection relationship L_{3,10}, the first connection relationship L_{9,10}, and the first connection relationship Li₀,₁₁. The first connection relationship corresponding to the qubit cell 11 includes the first connection relationship L_{2,11}, the first connection relationship L_{10,11}, and the first connection relationship L_{11,12}. The first connection relationship corresponding to the qubit cell 12 includes the first connection relationship L_{1,12} and the first connection relationship L_{11,12}.

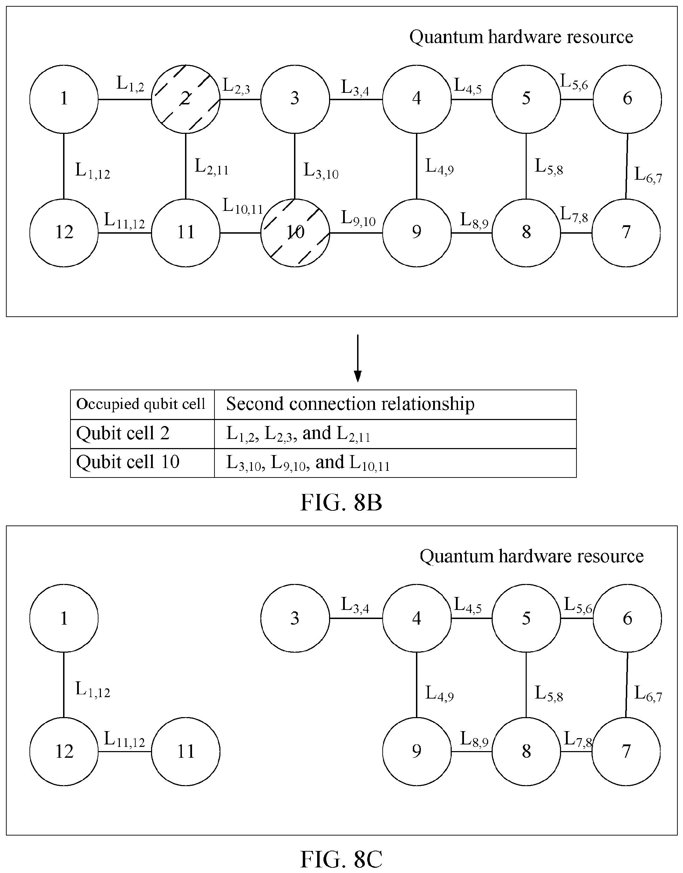

In operation 720, the occupied qubit cell refers to the original qubit cell occupied or damaged by another task. For example, as shown in FIG. 8B, among the 12 original qubit cells of the quantum hardware resource, the qubit cell 2 and the qubit cell 10 are the occupied qubit cells.

In operation 730, if a certain original qubit cell of the quantum hardware resource is the occupied qubit cell, the original qubit cell is not available, and the connection relationship related to the original qubit cell is not available either. Therefore, the second connection relationships between the occupied qubit cells and between each of the occupied qubit cells and the adjacent qubit cell need to be obtained. For example, still as shown in FIG. 8B, the second connection relationship corresponding to the qubit cell 2 includes a second connection relationship L_{1,2}, a second connection relationship L_{2,3}, and a second connection relationship L_{2,11}. The second connection relationship corresponding to the qubit cell 10 includes a second connection relationship L_{3,10}, a second connection relationship L_{9,10}, and a second connection relationship Li₀,₁₁.

In operation 740, the occupied qubit cells are removed from the original qubit cells, and the second connection relationship is removed from the first connection relationship, to obtain the qubit cell network. For example, as shown in FIG. 8C, the qubit cell 2 and the qubit cell 10 are removed from the 12 original qubit cells, to obtain a total of 10 original qubit cells, the original qubit cells including {a qubit cell 1, a qubit cell 3, a qubit cell 4, a qubit cell 5, a qubit cell 6, a qubit cell 7, a qubit cell 8, a qubit cell 9, a qubit cell 11, and a qubit cell 12}. Next, L_{1,2}, L_{2,3}, L_{2,11}, L_{3,10}, L_{9,10}, and L_{10,11} are removed from the 16 first connection relationships, to obtain a total of 10 first connection relationships, the first connection relationships including {the first connection relationship L_{3,4}, the first connection relationship L_{4,5}, the first connection relationship L_{5,6}, the first connection relationship L_{6,7}, the first connection relationship L_{7,8}, the first connection relationship L_{8,9}, the first connection relationship L_{11,12}, the first connection relationship L_{1,12}, the first connection relationship L_{4,9}, and the first connection relationship L_{5,8}}.

An advantage of the embodiment is that the occupied qubit cell and the connection relationship related to the occupied qubit cell are removed from the original qubit cells and the first connection relationship between the original qubit cells in the quantum hardware resource, thereby reducing a possibility of existence of an unavailable qubit cell in the qubit cell network, and improving availability of the qubit cell network.

### Detailed description of operation 330

In operation 330, the plurality of candidate qubit cell subnetworks conforming to the target qubit cell topology are obtained from the qubit cell network. The candidate qubit cell subnetworks form a subset of the qubit cell network. In fact, if one of the candidate qubit cell subnetworks includes qubit cells in the target qubit cell topology and the connection relationship between the qubit cells, the candidate qubit cell is conforming to the target qubit cell topology. Therefore, in an embodiment, assuming that the target qubit cell topology includes a first quantity of qubit cells, the qubit cell network is screened based on the first quantity of qubit cells, and then the screened qubit cell subnetwork is searched for a candidate qubit cell subnetwork including a connection relationship that is also the same as the connection relationship between the qubit cells in the target qubit cell topology.

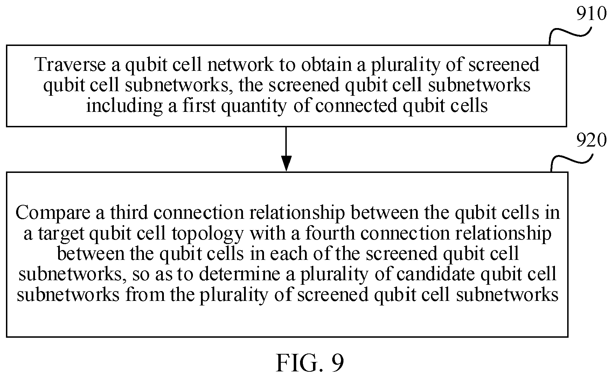

Referring to FIG. 9, during specific implementation of the embodiment, the target qubit cell topology includes a first quantity of qubit cells. Operation 330 includes the following operations.

At 910: Traverse the qubit cell network to obtain a plurality of screened qubit cell subnetworks, the screened qubit cell subnetworks including a first quantity of connected qubit cells.

At 920: Compare a third connection relationship between the qubit cells in the target qubit cell topology with a fourth connection relationship between the qubit cells in each of the screened qubit cell subnetworks, so as to determine the plurality of candidate qubit cell subnetworks from the plurality of screened qubit cell subnetworks.

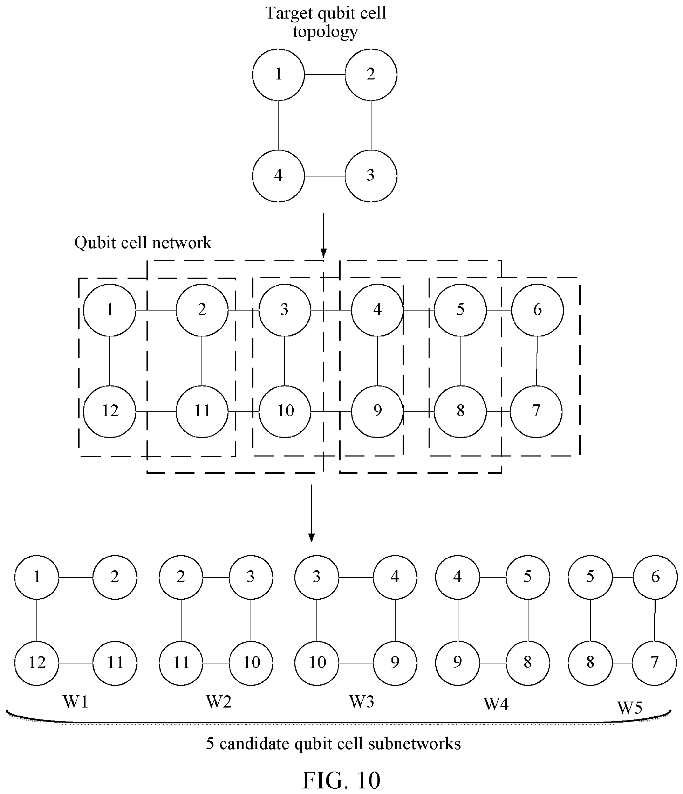

In operation 910, the screened qubit cell subnetwork is a subset of the qubit cell network and includes the first quantity of qubit cells. As shown in FIG. 10, assuming that the target qubit cell topology includes 4 qubit cells, the qubit cell network includes 12 qubit cells. After the traversal, the obtained screened qubit cell subnetwork includes 4 connected qubit cells. FIG. 10 shows 5 screened qubit cell subnetworks (a part of a matrix circled by dashed lines in FIG. 10), but in fact, there is another screened qubit cell subnetwork. For example, a qubit cell 1, a qubit cell 2, a qubit cell 3, and a qubit cell 4 in the qubit cell network can also form a screened qubit cell subnetwork.

In operation 920, the quantity of qubit cells in the screened qubit cell subnetwork is the same as that in the target qubit cell topology, but the connection relationship is not necessarily the same. Therefore, the third connection relationship needs to be compared with the fourth connection relationship. The screened qubit cell subnetwork having a comparison result being a consistent connection relationship is used as the candidate qubit cell subnetwork.

For example, still as shown in FIG. 10, 5 candidate qubit cell subnetworks may be determined from the plurality of screened qubit cell subnetworks. The 5 candidate qubit cell subnetworks include a candidate qubit cell subnetwork W1, a candidate qubit cell subnetwork W2, a candidate qubit cell subnetwork W3, a candidate qubit cell subnetwork W4, and a candidate qubit cell subnetwork W5. The candidate qubit cell subnetwork W1 includes the qubit cell 1, the qubit cell 2, a qubit cell 11, and a qubit cell 12. The candidate qubit cell subnetwork W2 includes the qubit cell 2, the qubit cell 3, a qubit cell 10, and the qubit cell 11. The candidate qubit cell subnetwork W3 includes the qubit cell 3, the qubit cell 4, a qubit cell 9, and the qubit cell 10. The candidate qubit cell subnetwork W4 includes the qubit cell 4, a qubit cell 5, a qubit cell 8, and the qubit cell 9. The candidate qubit cell subnetwork W5 includes the qubit cell 5, a qubit cell 6, a qubit cell 7, and the qubit cell 8.

The plurality of candidate qubit cell subnetworks are different from each other, but an overlap may exist. For example, an overlapping part of W1 and W2 includes the qubit cell 2 and the qubit cell 11. An overlapping part of W2 and W3 includes the qubit cell 3 and the qubit cell 10. An overlapping part of W3 and W4 includes the qubit cell 4 and the qubit cell 9. An overlapping part of W4 and W5 includes the qubit cell 5 and the qubit cell 8.

An advantage of the embodiment of operations 910-920 is that the screened qubit cell subnetwork has fewer qubit cells than the qubit cell network, and then the screened qubit cell subnetwork is searched for the qubit cell subnetwork having the connection relationship conforming to a third connection relationship to serve as the candidate qubit cell subnetwork. The third connection relationship is a connection relationship between the qubit cells in the target qubit cell topology. In this way, efficiency of determining the candidate qubit cell subnetwork is improved.

### Detailed description of operation 340

In operation 340, the overall operation fidelity of each candidate qubit cell subnetwork is determined based on the self-operation fidelity of each qubit cell in each candidate qubit cell subnetwork and the mutual operation fidelity between the adjacent qubit cells.

When the qubit cell performs the quantum computing task, the gate operation is generally expected to reach an expected result. The expected result refers to a theoretical gate operation result, and the expected result may also be referred to as an expected gate operation result. However, the result generally has a deviation due to various reasons. A degree of closeness between an actual gate operation result (i.e., an observation result obtained through observation of a state of a qubit after the gate operation) and the expected gate operation result is a fidelity. The fidelity of the gate operation represents a fidelity of performing a task. The fidelity of the gate operation is represented by a self-operation fidelity and a mutual operation fidelity in the embodiment of the present disclosure.

The self-operation fidelity refers to a degree of closeness between a first actual operation result and a first expected operation result from a gate operation performed by a qubit cell alone. The first expected operation result refers to a theoretical operation result of the gate operation performed on only one qubit cell. A higher degree of closeness indicates a higher self-operation fidelity. For example, if the first actual operation result is 0.9 and the first expected operation result is 0.8, the self-operation fidelity is (0.8-|0.8-0.9|)/0.8=7/8.

The mutual operation fidelity refers to a degree of closeness between a second actual operation result and a second expected operation result after the gate operation is performed between the qubit cells. The second expected operation result refers to a theoretical operation result of the gate operation performed between the qubit cells. A higher degree of closeness indicates a higher mutual operation fidelity. For example, if the second actual operation result is 0.7 and the second expected operation result is 0.9, the mutual operation fidelity is (0.9- |0.9-0.7|)/0.9=7/9.

In an embodiment, the overall operation fidelity may be determined by calculating a sum of the self-operation fidelity and the mutual operation fidelity. For example, the candidate qubit cell subnetwork includes N qubit cells. If the self-operation fidelity of each qubit cell includes {N₁, N₂, ..., Nₙ₋₁, Nₙ}, and the mutual operation fidelity between the adjacent qubit cells includes {M₁, M₂, ..., Mₙ₋₁, Mₙ}, the overall operation fidelity is Q, where (N₁ + N₂ + ... + Nₙ₋₁ + Nₙ + M₁ + M₂ + ... + Mₙ₋₁ + Mₙ)=Q. An advantage of using and calculating the overall operation fidelity is that impact of the self-operation fidelity and the mutual operation fidelity on the determination of the overall operation fidelity may be equally reflected.

Specifically, for example, the candidate qubit cell subnetwork includes 4 qubit cells. If the self-operation fidelity of each qubit cell includes {0.9, 0.8, 0.7, 0.8}, and the mutual operation fidelity between the adjacent qubit cells includes {0.6, 0.4, 0.7, 0.6}, the overall operation fidelity is (0.9+0.8+0.7+0.8+0.6+0.4+0.7+0.6) =5.5.

In an embodiment, the overall operation fidelity may be determined by calculating a weighted sum of the self-operation fidelity and the mutual operation fidelity.

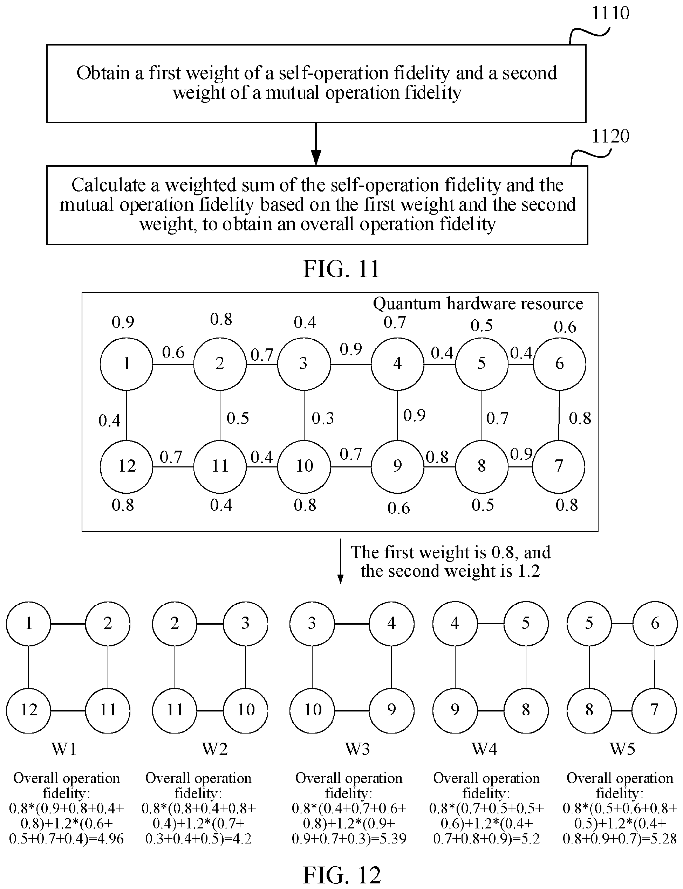

Referring to FIG. 11, during specific implementation of the embodiment, operation 340 includes the following operations.

At 1110: Obtain a first weight of the self-operation fidelity and a second weight of the mutual operation fidelity.

At 1120: Calculate a weighted sum of the self-operation fidelity and the mutual operation fidelity based on the first weight and the second weight, to obtain the overall operation fidelity.

In operation 1110, the first weight and the second weight may be set in advance. For example, the first weight is set to A, for example, a value of A is 0.9, and the second weight is set to B, for example, a value of B is 1.1. In other words, regardless of the quantum computing task, the overall operation fidelity may be calculated by using a fixed first weight and a fixed second weight.

In an embodiment, operation 1110 includes:
obtaining a task type of a target quantum computing task; and
searching, using the task type, a preset mapping relationship between task types and weights to obtain the first weight and the second weight.

Specifically, the task type refers to a type to which the target quantum computing task belongs in a preset type set. For example, the type set includes a first type, a second type, and a third type. In an embodiment, the task type of the target quantum computing task may be obtained through model classification or in another type determination manner. The mapping relationship between task types and weights are shown in Table 1. When the task type is the first type, a corresponding first weight is A₁, and a corresponding second weight is A₂. When the task type is the second type, a corresponding first weight is B₁, and a corresponding second weight is B₂. When the task type is the third type, a corresponding first weight is C₁, and a corresponding second weight is C₂. Weight values in Table 1 may be set based on experience or another reasonable calculation.

Specifically, for example, in Table 1 above, a value of A₁ is 0.6, a value of A₂ is 1.4, a value of B₁ is 0.8, a value of B₂ is 1.2, a value of C₁ is 0.9, and a value of C₂ is 1.1. Assuming that the task type is the first type, the first weight of 0.6 and the second weight of 1.4 are obtained. Assuming that the task type is the second type, the first weight of 0.8 and the second weight of 1.2 are obtained. Assuming that the task type is the third type, the first weight of 0.9 and the second weight of 1.1 are obtained.

**Table 1 Table of mapping relationship between task types and weights**

| Task type | Weight |
|---|---|
| First type | First weight A₁, second weight A₂ |
| Second type | First weight B₁, second weight B₂ |
| Third type | First weight C₁, second weight C₂ |

After the first weight and the second weight are obtained in operation 1110, the weighted sum of the self-operation fidelity and the mutual operation fidelity is calculated based on the first weight and the second weight to obtain the overall operation fidelity in operation 1120.

An advantage of the embodiment of operations 1110-1120 is that different weights may be set for the self-operation fidelity and the mutual operation fidelity, thereby improving flexibility of determining the overall operation fidelity.

In an example, the quantum hardware resource includes 12 qubit cells. The candidate qubit cell subnetwork W1 includes a qubit cell 1, a qubit cell 2, a qubit cell 11, and a qubit cell 12. The candidate qubit cell subnetwork W2 includes the qubit cell 2, a qubit cell 3, a qubit cell 10, and the qubit cell 11. The candidate qubit cell subnetwork W3 includes the qubit cell 3, a qubit cell 4, a qubit cell 9, and the qubit cell 10. The candidate qubit cell subnetwork W4 includes the qubit cell 4, a qubit cell 5, a qubit cell 8, and the qubit cell 9. The candidate qubit cell subnetwork W5 includes the qubit cell 5, a qubit cell 6, a qubit cell 7, and the qubit cell 8.

The self-operation fidelity of the qubit cell 1 is Z₁. The self-operation fidelity of the qubit cell 2 is Z₂. The self-operation fidelity of the qubit cell 3 is Z₃. The self-operation fidelity of the qubit cell 4 is Z₄. The self-operation fidelity of the qubit cell 5 is Z₅. The self-operation fidelity of the qubit cell 6 is Z₆. The self-operation fidelity of the qubit cell 7 is Z₇. The self-operation fidelity of the qubit cell 8 is Z₈. The self-operation fidelity of the qubit cell 9 is Z₉. The self-operation fidelity of the qubit cell 10 is Z₁₀. The self-operation fidelity of the qubit cell 11 is Z₁₁. The self-operation fidelity of the qubit cell 12 is Z₁₂.

The mutual operation fidelity between the qubit cell 1 and the qubit cell 2 is H_{1,2}. The mutual operation fidelity between the qubit cell 2 and the qubit cell 3 is H_{2,3}. The mutual operation fidelity between the qubit cell 3 and the qubit cell 4 is H_{3,4}. The mutual operation fidelity between the qubit cell 4 and the qubit cell 5 is H_{4,5}. The mutual operation fidelity between the qubit cell 5 and the qubit cell 6 is H_{5,6}. The mutual operation fidelity between the qubit cell 6 and the qubit cell 7 is H_{6,7}. The mutual operation fidelity between the qubit cell 7 and the qubit cell 8 is H_{7,8}. The mutual operation fidelity between the qubit cell 8 and the qubit cell 9 is H_{8,9}. The mutual operation fidelity between the qubit cell 9 and the qubit cell 10 is H_{9,10}. The mutual operation fidelity between the qubit cell 10 and the qubit cell 11 is H_{10,11}. The mutual operation fidelity between the qubit cell 11 and the qubit cell 12 is H_{11,12}. The mutual operation fidelity between the qubit cell 1 and the qubit cell 12 is H_{1,12}. The mutual operation fidelity between the qubit cell 2 and the qubit cell 11 is H_{2,12}. The mutual operation fidelity between the qubit cell 3 and the qubit cell 10 is H_{3,10}. The mutual operation fidelity between the qubit cell 4 and the qubit cell 9 is H_{4,9}. The mutual operation fidelity between the qubit cell 5 and the qubit cell 8 is H_{5,8}.

It is assumed that the first weight is B₁ and the second weight is B₂ in Table 1.

The overall operation fidelity of the candidate qubit cell subnetwork W1 is B₁*(Z₁+Z₂+Z₁₁+Z₁₂)+B₂*(H_{1,2}H_{2,11}+H_{11,12}+H_{1,12})=Q₁.

The overall operation fidelity of the candidate qubit cell subnetwork W2 is B₁*(Z₂+Z₃+Z₁₀+Z₁₁)+B₂*(H_{2,3}+H_{3,10}+H_{10,11}+H_{2,11})=Q₂.

The overall operation fidelity of the candidate qubit cell subnetwork W3 is B₁*(Z₃+Z₄+Z₉+Z₁₀)+B₂*(H_{3,4}+H_{4,9}+H_{9,10}+H_{3,10})=Q₃.

The overall operation fidelity of the candidate qubit cell subnetwork W4 is B₁*(Z₄+Z₅+Z₈+Z₉)+B₂*(H_{4,5}+H_{5,8}+H_{8,9}+H_{4,9})=Q₄.

The overall operation fidelity of the candidate qubit cell subnetwork W5 is B₁*(Z₅+Z₆+Z₇+Z₈)+B₂*(H_{5,6}+H_{6,7}+H_{7,8}+H_{5,8})=Q₅.

Specifically, for example, as shown in FIG. 12, the quantum hardware resource includes 12 qubit cells. The self-operation fidelity Z₁ of the qubit cell 1 is 0.9. The self-operation fidelity Z₂ of the qubit cell 2 is 0.8. The self-operation fidelity Z₃ of the qubit cell 3 is 0.4. The self-operation fidelity Z₄ of the qubit cell 4 is 0.7. The self-operation fidelity Z₅ of the qubit cell 5 is 0.5. The self-operation fidelity Z₆ of the qubit cell 6 is 0.6. The self-operation fidelity Z₇ of the qubit cell 7 is 0.8. The self-operation fidelity Z₈ of the qubit cell 8 is 0.5. The self-operation fidelity Z₉ of the qubit cell 9 is 0.6. The self-operation fidelity Z₁₀ of the qubit cell 10 is 0.8. The self-operation fidelity Z₁₁ of the qubit cell 11 is 0.4. The self-operation fidelity Z₁₂ of the qubit cell 12 is 0.8.

Still as shown in FIG. 12, the mutual operation fidelity H_{1,2} between the qubit cell 1 and the qubit cell 2 is 0.6. The mutual operation fidelity H_{2,3} between the qubit cell 2 and the qubit cell 3 is 0.7. The mutual operation fidelity H_{3,4} between the qubit cell 3 and the qubit cell 4 is 0.9. The mutual operation fidelity H_{4,5} between the qubit cell 4 and the qubit cell 5 is 0.4. The mutual operation fidelity H_{5,6} between the qubit cell 5 and the qubit cell 6 is 0.4. The mutual operation fidelity H_{6,7} between the qubit cell 6 and the qubit cell 7 is 0.8. The mutual operation fidelity H_{7,8} between the qubit cell 7 and the qubit cell 8 is 0.9. The mutual operation fidelity H_{8,9} between the qubit cell 8 and the qubit cell 9 is 0.8. The mutual operation fidelity H_{9,10} between the qubit cell 9 and the qubit cell 10 is 0.7. The mutual operation fidelity H_{10,11} between the qubit cell 10 and the qubit cell 11 is 0.4. The mutual operation fidelity H_{11,12} between the qubit cell 11 and the qubit cell 12 is 0.7. The mutual operation fidelity H_{1,12} between the qubit cell 1 and the qubit cell 12 is 0.4. The mutual operation fidelity H_{2,11} between the qubit cell 2 and the qubit cell 11 is 0.5. The mutual operation fidelity H_{3,10} between the qubit cell 3 and the qubit cell 10 is 0.3. The mutual operation fidelity H_{4,9} between the qubit cell 4 and the qubit cell 9 is 0.9. The mutual operation fidelity H_{5,8} between the qubit cell 5 and the qubit cell 8 is 0.7.

It is assumed that the first weight B₁ is 0.8 and the second weight B₂ is 1.2. Still as shown in FIG. 12,
the overall operation fidelity of the candidate qubit cell subnetwork W1 is 0.8*(0.9+0.8+0.4+0.8)+1.2*(0.6+0.5+0.7+0.4)=4.96;
the overall operation fidelity of the candidate qubit cell subnetwork W2 is 0.8*(0.8+0.4+0.8+0.4)+1.2*(0.7+0.3+0.4+0.5)=4.2;
the overall operation fidelity of the candidate qubit cell subnetwork W3 is 0.8*(0.4+0.7+0.6+0.8)+1.2*(0.9+0.9+0.7+0.3)=5.39;
the overall operation fidelity of the candidate qubit cell subnetwork W4 is 0.8*(0.7+0.5+0.5+0.6)+1.2*(0.4+0.7+0.8+0.9)=5.2; and
the overall operation fidelity of the candidate qubit cell subnetwork W5 is 0.8*(0.5+0.6+0.8+0.5)+1.2*(0.4+0.8+0.9+0.7)=5.28.

### Detailed description of operation 350

In operation 350, the target qubit cell subnetwork is determined based on the overall operation fidelity of each of the plurality of candidate qubit cell subnetworks, the target qubit cell subnetwork serving as a virtualized resource for the target quantum computing task.

In an embodiment, the plurality of overall operation fidelities may be arranged in order of magnitude, and the candidate qubit cell subnetwork corresponding to a maximum overall operation fidelity is selected from a result of the arrangement as the target qubit cell subnetwork. Alternatively, the plurality of overall operation fidelities are compared with a fidelity threshold, and the candidate qubit cell subnetwork whose overall operation fidelity is greater than the fidelity threshold is used as the target qubit cell subnetwork.

An advantage of the embodiment is that determining the target qubit cell subnetwork only based on the overall operation fidelity may improve efficiency of determining the target qubit cell subnetwork.

The overall operation fidelity actually refers to an operation accuracy generated when the candidate qubit cell subnetwork does not fail. However, to some extent, some candidate qubit cell subnetworks are prone to failure. If a certain candidate qubit cell subnetwork has a high failure rate, the candidate qubit cell subnetwork is not to be used as the target qubit cell subnetwork even if the overall operation fidelity thereof is relatively high.

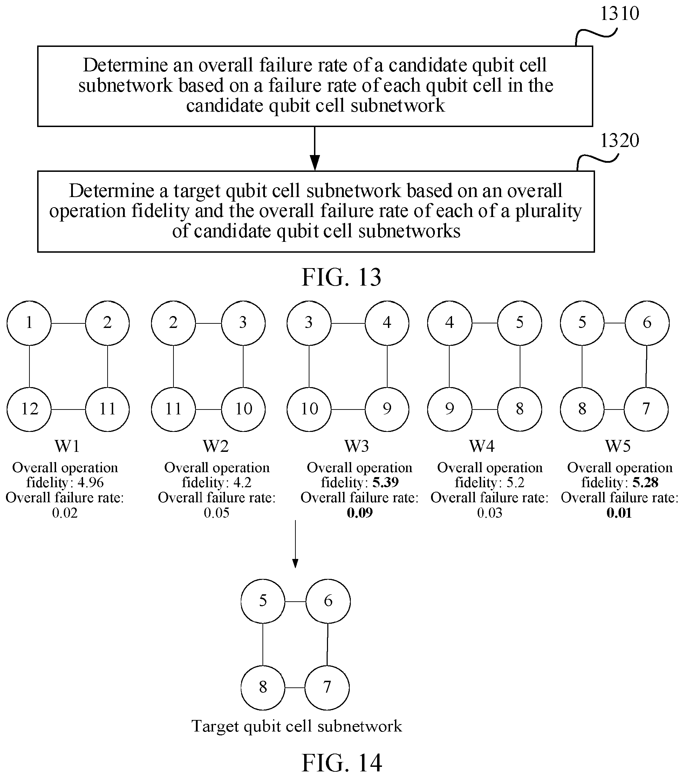

Referring to FIG. 13, during specific implementation of the embodiment, operation 350 includes the following operations.

At 1310: Determine an overall failure rate of each candidate qubit cell subnetwork based on a failure rate of each qubit cell in each candidate qubit cell subnetwork.

At 1320: Determine the target qubit cell subnetwork based on the overall operation fidelity and the overall failure rate of the plurality of candidate qubit cell subnetworks.

An advantage of the embodiment is that the target qubit cell subnetwork is determined through the overall operation fidelity of each of the plurality of candidate qubit cell subnetworks and the overall failure rate of the plurality of candidate qubit cell subnetworks. In addition, considering the overall failure rate and the overall operation fidelity of the candidate qubit cell subnetwork, stability of the determined target qubit cell subnetwork may be improved, and execution of the target quantum computing task may be prevented from being affected due to a relatively high overall failure rate of the target qubit cell subnetwork.

In operation 1310, each candidate qubit cell subnetwork includes a plurality of qubit cells. Each qubit cell has a corresponding failure rate. The failure rate of each qubit cell is calculated to obtain the overall failure rate. For example, if the candidate qubit cell subnetwork includes 4 qubit cells and the failure rates are respectively 0.01, 0.03, 0.02, and 0.01, the overall failure rate is (0.1+0.3+0.2+0.1)/4=0.0175.

After the overall failure rate is determined in operation 1310, in operation 1320, the target qubit cell subnetwork is determined based on the overall operation fidelity and the overall failure rate of the plurality of candidate qubit cell subnetworks.

For example, as shown in FIG. 14, there are 5 candidate qubit cell subnetworks in total. The overall operation fidelity of the candidate qubit cell subnetwork W1 is 4.96, and the overall failure rate is 0.02. The overall operation fidelity of the candidate qubit cell subnetwork W2 is 4.2, and the overall failure rate is 0.05. The overall operation fidelity of the candidate qubit cell subnetwork W3 is 5.39, and the overall failure rate is 0.09. The overall operation fidelity of the candidate qubit cell subnetwork W4 is 5.2, and the overall failure rate is 0.03. The overall operation fidelity of the candidate qubit cell subnetwork W5 is 5.28, and the overall failure rate is 0.01. In the example, W3 has the maximum overall operation fidelity, but W3 has the overall failure rate of 0.09 and therefore is not suitable for being used as the target qubit cell subnetwork due to a relatively high overall failure rate. Although the overall operation fidelity of W5 is lower than that of W3, the overall failure rate of W5 is 0.01. After overall consideration of the overall operation fidelity and the overall failure rate of the plurality of candidate qubit cell subnetworks, W5 is used as the target qubit cell subnetwork.

In an embodiment, operation 1320 includes:
determining a first score based on the overall operation fidelity of each candidate qubit cell subnetwork;
determining a second score based on the overall failure rate of each candidate qubit cell subnetwork;
determining a total score of each candidate qubit cell subnetwork based on the first score and the second score; and
determining the target qubit cell subnetwork based on the total score of the plurality of candidate qubit cell subnetworks.

Specifically, the first score may be determined based on the overall operation fidelity of each candidate qubit cell subnetwork through lookup of a comparison table of an overall operation fidelity range and the first score or by using an equation method.
(1) The comparison table of the overall operation fidelity range and the first score lists a correspondence between the overall operation fidelity range and the first score. The overall operation fidelity range is obtained based on the overall operation fidelity, and then the first score may be obtained through lookup of the comparison table of the overall operation fidelity range and the first score. Table 2 below is an example of the comparison table of the overall operation fidelity range and the first score.

**Table 2 Table of the correspondence between the overall operation fidelity ranges and the first scores**

| Overall operation fidelity range | First score |
|---|---|
| Above 0.9 | 100 |
| 0.7-0.9 | 90 |
| 0.5-0.7 | 80 |
| 0.3-0.5 | 70 |
| 0.1-0.3 | 60 |
| ... | ... |

For example, if the overall operation fidelity is 0.8, the overall operation fidelity range is 0.7-0.9. The corresponding first score of 90 is obtained through lookup of Table 2.

The foregoing manner of searching the comparison table of the overall operation fidelity range and the first score has the advantages of simplicity, convenience, and low processing overheads.

(2) When the equation method is used, the first score may be set to be proportional to the overall operation fidelity, for example, $F 1 = K 1 * G 1$ Equation 1

F1 represents the first score, G1 represents the overall operation fidelity, and K1 is a preset constant that may be set according to an actual need. For example, K1=112.5, and the first score F1=90 after G1=0.8 is substituted.

The foregoing manner of determining the first score by using the equation has the advantages of a high accuracy, and the equation can be adjusted as needed and is highly flexible.

The second score may be determined based on the overall failure rate of the candidate qubit cell subnetwork through lookup of a comparison table of an overall failure rate range and the second score or by using an equation method.
(1) The comparison table of the overall failure rate range and the second score lists a correspondence between the overall failure rate range and the second score. The overall failure rate range is obtained based on the overall failure rate, and then the second score may be obtained through lookup of the comparison table of the overall failure rate range and the second score. Table 3 below is an example of the comparison table of the overall failure rate range and the second score.

**Table 3 Table of the correspondence between the overall failure rate ranges and the second scores**

| Overall failure rate range | Second score |
|---|---|
| 0-0.01 | 100 |
| 0.01-0.03 | 90 |
| 0.03-0.05 | 80 |
| 0.05-0.07 | 70 |
| 0.07-0.09 | 60 |
| ... | ... |

For example, if the overall failure rate is 0.02, the overall failure rate range is 0.01-0.03. The corresponding second score of 90 is obtained through lookup of Table 3.

The foregoing manner of searching the comparison table of the overall failure rate range and the second score has the advantages of simplicity, convenience, and low processing overheads.

(2) When the equation method is used, the second score may be set to be inversely proportional to the overall failure rate, for example, $F 2 = K 2 * G 2 + b$ Equation 2

F2 represents the second score, G2 represents the overall failure rate, and K2 and b are preset constants that may be set according to actual needs. For example, K2=-100 and b=92, and the second score F2=90 after G2=0.02 is substituted.

The foregoing manner of determining the second score by using the equation has the advantages of a high accuracy, and the equation can be adjusted as needed and is highly flexible.

Based on the first score and the second score, the total score of the candidate qubit cell subnetwork may be determined by calculating an average or a weighted average of the first score and the second score.

When the average of the first score and the second score is calculated as the total score, for example, if the first score is 90 and the second score is 80, the total score is (90+80)/2=85. An advantage of using the average to calculate the total score is that impact of the overall operation fidelity and the overall failure rate on the determination of the total score may be equally reflected.

When the weighted average of the first score and the second score is calculated as the total score, for example, the weights of 0.6 and 0.4, the first score of 90, and the second score of 80 are respectively set for the overall operation fidelity and the overall failure rate, the total score is 90×0.6+80×0.4=86. An advantage of using the weighted average to calculate the total score is that different weights can be set for the overall operation fidelity and the overall failure rate, thereby improving flexibility of determining the total score.

The target qubit cell subnetwork is determined based on the total score of the plurality of candidate qubit cell subnetworks. The plurality of total scores may be arranged in order of magnitude, and the candidate qubit cell subnetwork corresponding to a maximum total score is selected from a result of the arrangement as the target qubit cell subnetwork. Alternatively, the plurality of total scores are compared with a first threshold, and any one of the plurality of candidate qubit cell subnetworks whose total score is greater than the first threshold is selected as the target qubit subnetwork.

An advantage of the embodiment is that the total score is jointly determined based on the first score of the overall operation fidelity and the second score of the overall failure rate, so that the target qubit cell network is determined based on the total score, thereby improving a determination accuracy.

In the foregoing embodiment, the target qubit cell network is determined based on the overall operation fidelity and the overall failure rate, with a greater emphasis on ensuring stability of the target qubit cell network. In an embodiment, to ensure that the target qubit cell network can meet the operation accuracy requirement required by the target quantum computing task, the target qubit cell subnetwork needs to be determined based on an importance degree of the target quantum computing task.

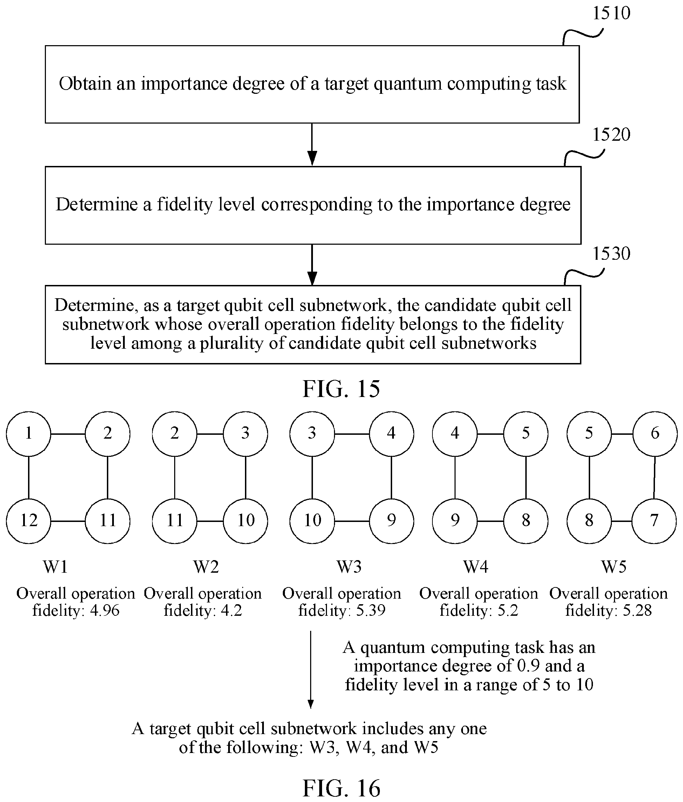

Referring to FIG. 15, during specific implementation of the embodiment, operation 350 includes the following operations.

At 1510: Obtain an importance degree of a target quantum computing task.

At 1520: Determine a fidelity level corresponding to the importance degree.

At 1530: Determine, as the target qubit cell subnetwork, the candidate qubit cell subnetwork whose overall operation fidelity belongs to the fidelity level among the plurality of candidate qubit cell subnetworks.

In operation 1510, the importance degree indicates the importance degree of the target quantum computing task. For example, if a certain target quantum computing task includes a relatively large quantity of mutual operations, the target quantum computing task has a higher importance degree. The importance degree may be automatically marked for the target quantum computing task when being generated, so that the importance degree of the target quantum computing task can be obtained. Alternatively, when the target qubit cell subnetwork is determined for the target quantum computing task, the target quantum computing task is parsed, and the importance degree is determined based on parsed quantum computing. A manner of obtaining the importance degree is not specifically limited in this embodiment.

In operation 1520, the determining the fidelity level corresponding to the importance degree may be searching for a preset mapping relationship between the importance degrees and the levels to obtain the fidelity level. The mapping relationship between the importance degrees and the fidelity levels is shown in Table 4. Assuming that the importance degree is in a range of 0.9 to 1, the fidelity level in a range of 5 to 10 is obtained. Assuming that the importance degree is in a range of 0.7 to 0.9, the fidelity level in a range of 4 to 5 is obtained. Assuming that the importance degree is in a range of 0.5 to 0.7, the fidelity level in a range of 1 to 4 is obtained.

**Table 4 Table of mapping relationship between the importance degrees and the fidelity levels**

| Importance degree | Fidelity level |
|---|---|
| 0.9-1 | 5-10 |
| 0.7-0.9 | 4-5 |
| 0.5-0.7 | 1-4 |
| ... | ... |

In operation 1530, the candidate qubit cell subnetwork whose overall operation fidelity belongs to the fidelity level among the plurality of candidate qubit cell subnetworks is determined as the target qubit cell subnetwork. For example, as shown in FIG. 16, an overall operation fidelity of a candidate qubit cell subnetwork W1 is 4.96. An overall operation fidelity of a candidate qubit cell subnetwork W2 is 4.2. An overall operation fidelity of a candidate qubit cell subnetwork W3 is 5.39. An overall operation fidelity of a candidate qubit cell subnetwork W4 is 5.2. An overall operation fidelity of a candidate qubit cell subnetwork W5 is 5.28. Assuming that the importance degree of the target quantum computing task is 0.9, a fidelity level in a range of 5 to 10 is obtained through lookup of Table 4. The overall operation fidelity belonging to the fidelity level in a range of 5 to 10 is 5.39, 5.2, and 5.28, so that any one of the candidate qubit cell subnetwork W3, the candidate qubit cell subnetwork W4, and the candidate qubit cell subnetwork W5 may be used as the target qubit cell subnetwork.

An advantage of the embodiment of operations 1510-1530 is that the target qubit cell network is determined by using the task type of the target quantum computing task, so that the overall operation fidelity of the target qubit cell is linked up with the task type, thereby improving the correlation between the target quantum computing task and the target qubit cell network.

Two embodiments of operation 350 described above are both determining a target qubit cell subnetwork for one target quantum computing task. However, in an embodiment, there are a plurality of target quantum computing tasks, and a plurality of target qubit cell subnetworks need to be determined simultaneously.

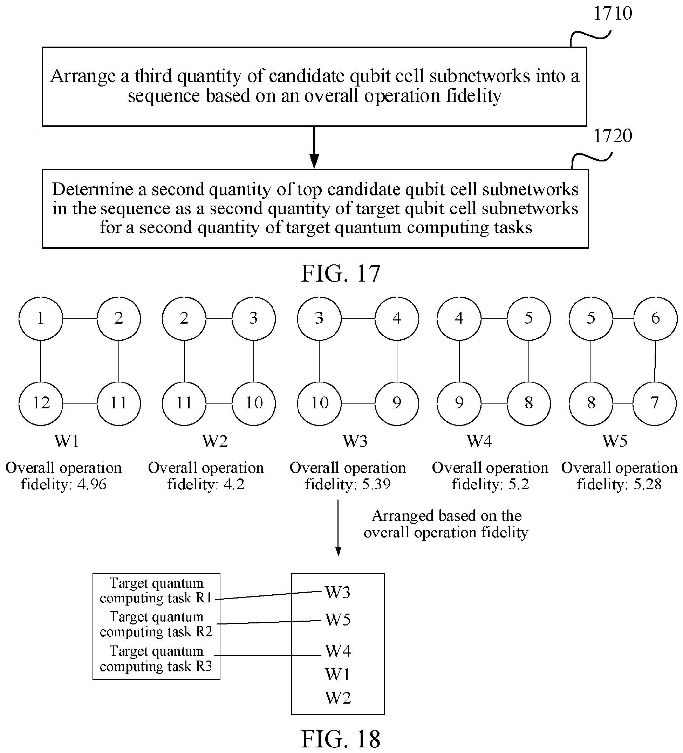

Referring to FIG. 17, during specific implementation of the embodiment, a second quantity of target quantum computing tasks are provided, and a third quantity of candidate qubit cell subnetworks are provided, the second quantity being less than the third quantity. Operation 350 includes the following operations.

At 1710: Arrange the third quantity of candidate qubit cell subnetworks into a sequence in descending order based on the overall operation fidelity.

At 1720: Determine a second quantity of top candidate qubit cell subnetworks in the sequence as a second quantity of target qubit cell subnetworks for the second quantity of target quantum computing tasks.

In an example, as shown in FIG. 18, a second quantity is 3, the second quantity of target quantum computing tasks specifically including a target quantum computing task R1, a target quantum computing task R2, and a target quantum computing task R3. A third quantity is 5, the third quantity of candidate qubit cell subnetworks specifically including a candidate qubit cell subnetwork W1, a candidate qubit cell subnetwork W2, a candidate qubit cell subnetwork W3, a candidate qubit cell subnetwork W4, and a candidate qubit cell subnetwork W5. After the candidate qubit cell subnetworks are arranged into a sequence in descending order based on the overall operation fidelity, the sequence is {W3, W5, W4, W1, W2}. The first 3 candidate qubit cell subnetworks in the sequence, namely W3, W5, and W4, are determined as the 3 target qubit cell subnetworks for the target quantum computing task R1, the target quantum computing task R2, and the target quantum computing task R3. For example, the candidate qubit cell subnetwork W3 is configured for the target quantum computing task R1, the candidate qubit cell subnetwork W5 is configured for the target quantum computing task R2, and the candidate qubit cell subnetwork W4 is configured for the target quantum computing task R3.

An advantage of the embodiment of operations 1710-1720 is that the second quantity of target qubit cell subnetworks may be determined for the second quantity of target quantum computing tasks simultaneously, thereby improving determination efficiency.

In operation 1710, the third quantity of candidate qubit cell subnetworks may also be arranged into a sequence in ascending order based on the overall operation fidelity. Then in operation 1720, a second quantity of last candidate qubit cell subnetworks in the sequence are determined as the second quantity of target qubit cell subnetworks for the second quantity of target quantum computing tasks.

The second quantity of target qubit cell subnetworks may be relatively dispersed in the quantum hardware resource. In this case, the dispersed target qubit cell subnetworks may also be applicable if the second quantity of target quantum computing tasks are not related to each other, but if the second quantity of target quantum computing tasks are related to each other, it is difficult for the dispersed target qubit cell subnetworks to achieve high processing efficiency. Therefore, in an embodiment, the candidate qubit cell subnetworks need to be combined. The second quantity of target qubit cell subnetworks are determined through a concentration degree of the combination.

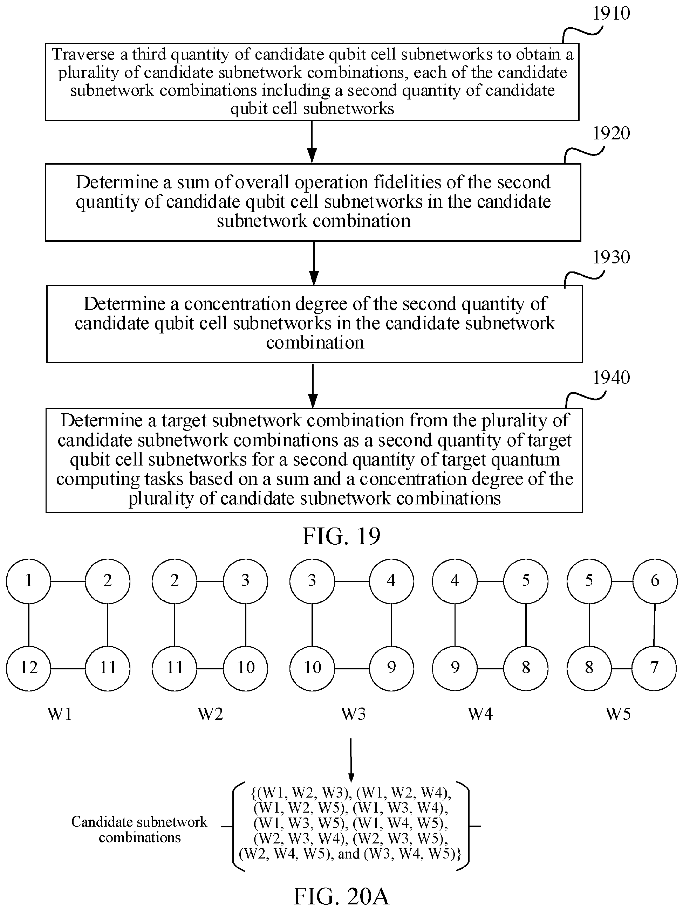

Referring to FIG. 19, during specific implementation of the embodiment, the target quantum computing task is a second quantity of associated target quantum computing tasks, and the candidate qubit cell subnetwork is a third quantity of candidate qubit cell subnetworks, the second quantity being less than the third quantity. Operation 350 includes the following operations.

At 1910: Traverse the third quantity of candidate qubit cell subnetworks to obtain a plurality of candidate subnetwork combinations, each of the candidate subnetwork combinations including a second quantity of candidate qubit cell subnetworks.

At 1920: Determine a sum of the overall operation fidelities of the second quantity of candidate qubit cell subnetworks in the candidate subnetwork combination.

At 1930: Determine a concentration degree of the second quantity of candidate qubit cell subnetworks in the candidate subnetwork combination.

At 1940: Determine a target subnetwork combination from the plurality of candidate subnetwork combinations as the second quantity of target qubit cell subnetworks for the second quantity of target quantum computing tasks based on a sum and a concentration degree of the plurality of candidate subnetwork combinations.

In operation 1910, as shown in FIG. 20A, the second quantity is 3, and the third quantity is 5. 10 candidate subnetwork combinations may be obtained from the 5 candidate qubit cell subnetworks W1, W2, W3, W4, and W5. Each candidate subnetwork combination includes 3 candidate qubit cell subnetworks. The candidate subnetwork combinations are {(W1, W2, W3), (W1, W2, W4), (W1, W2, W5), (W1, W3, W4), (W1, W3, W5), (W1, W4, W5), (W2, W3, W4), (W2, W3, W5), (W2, W4, W5), and (W3, W4, W5)}.

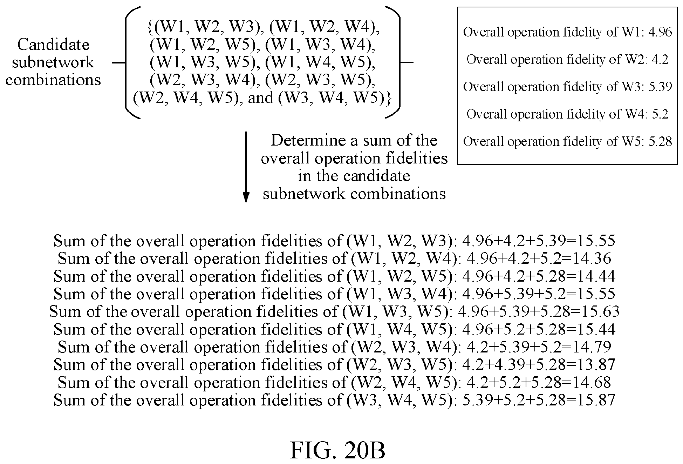

In operation 1920, as shown in FIG. 20B, a sum of the overall operation fidelities of (W1, W2, W3) is 4.96+4.2+5.39=15.55. A sum of the overall operation fidelities of (W1, W2, W4) is 4.96+4.2+5.2=14.36. A sum of the overall operation fidelities of (W1, W2, W5) is 4.96+4.2+5.28=14.44. A sum of the overall operation fidelities of (W1, W3, W4) is 4.96+5.39+5.2=15.55. A sum of the overall operation fidelities of (W1, W3, W5) is 4.96+5.39+5.28=15.63. A sum of the overall operation fidelities of (W1, W4, W5) is 4.96+5.2+5.28=15.44. A sum of the overall operation fidelities of (W2, W3, W4) is 4.2+5.39+5.2=14.79. A sum of the overall operation fidelities of (W2, W3, W5) is 4.2+4.39+5.28=13.87. A sum of the overall operation fidelities of (W2, W4, W5) is 4.2+5.2+5.28=14.68. A sum of the overall operation fidelities of (W3, W4, W5) is 5.39+5.2+5.28=15.87.

In operation 1930, the concentration degree of the second quantity of candidate qubit cell subnetworks in the candidate subnetwork combination is determined. The concentration degree indicates a degree of concentration of distances between every two of the candidate qubit cell subnetworks in the candidate subnetwork combination.

In an embodiment, operation 1930 includes:
determining a center point distance between every two of the second quantity of candidate qubit cell subnetworks in the candidate subnetwork combination; and
determining a reciprocal of an average distance of the center point distances as the concentration degree of the second quantity of candidate qubit cell subnetworks.

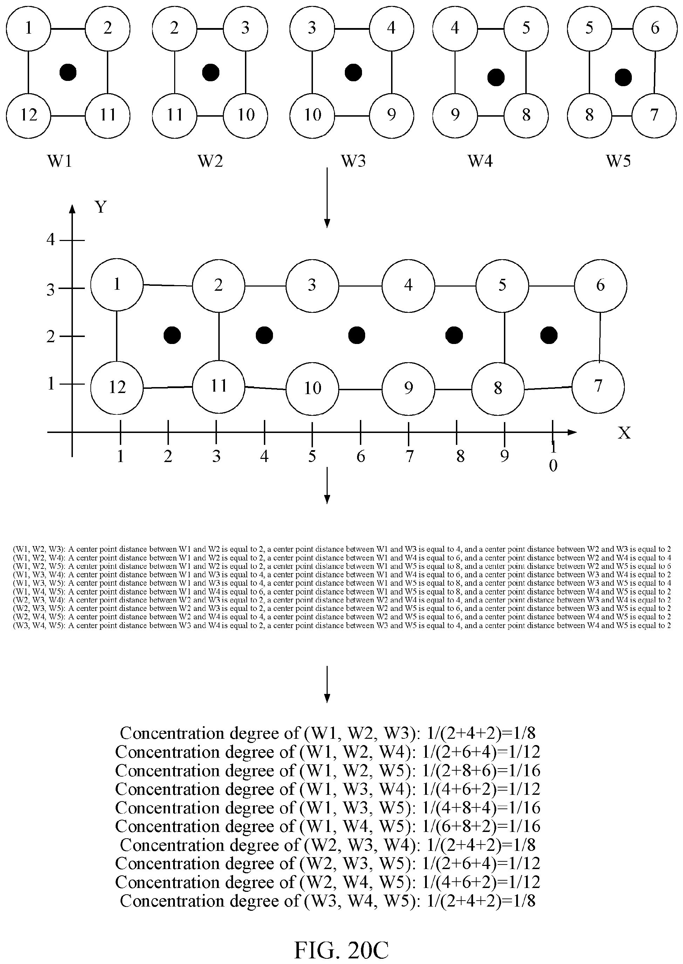

For example, as shown in FIG. 20C, a horizontal rectangular coordinate system is established, and a center point distance between every two of the 3 candidate qubit cell subnetworks in the candidate subnetwork combination is obtained from the horizontal rectangular coordinate system. Specifically, for the candidate subnetwork combination (W1, W2, W3), a center point distance between W1 and W2 is equal to 2, a center point distance between W1 and W3 is equal to 4, and a center point distance between W2 and W3 is equal to 2. For the candidate subnetwork combination (W1, W2, W4), a center point distance between W1 and W2 is equal to 2, a center point distance between W1 and W4 is equal to 6, and a center point distance between W2 and W4 is equal to 4. For the candidate subnetwork combination (W1, W2, W5), a center point distance between W1 and W2 is equal to 2, a center point distance between W1 and W5 is equal to 8, and a center point distance between W2 and W5 is equal to 6. For the candidate subnetwork combination (W1, W3, W4), a center point distance between W1 and W3 is equal to 4, a center point distance between W1 and W4 is equal to 6, and a center point distance between W3 and W4 is equal to 2. For the candidate subnetwork combination (W1, W3, W5), a center point distance between W1 and W3 is equal to 4, a center point distance between W1 and W5 is equal to 8, and a center point distance between W3 and W5 is equal to 4. For the candidate subnetwork combination (W1, W4, W5), a center point distance between W1 and W4 is equal to 6, a center point distance between W1 and W5 is equal to 8, and a center point distance between W4 and W5 is equal to 2. For the candidate subnetwork combination (W2, W3, W4), a center point distance between W2 and W3 is equal to 2, a center point distance between W2 and W4 is equal to 4, and a center point distance between W3 and W4 is equal to 2. For the candidate subnetwork combination (W2, W3, W5), a center point distance between W2 and W3 is equal to 2, a center point distance between W2 and W5 is equal to 6, and a center point distance between W3 and W5 is equal to 4. For the candidate subnetwork combination (W2, W4, W5), a center point distance between W2 and W4 is equal to 4, a center point distance between W2 and W5 is equal to 6, and a center point distance between W4 and W5 is equal to 2. For the candidate subnetwork combination (W3, W4, W5), a center point distance between W3 and W4 is equal to 2, a center point distance between W3 and W5 is equal to 4, and a center point distance between W4 and W5 is equal to 2.

Still as shown in FIG. 20C, a concentration degree of (W1, W2, W3) is 1/(2+4+2)=1/8. A concentration degree of (W1, W2, W4) is 1/(2+6+4)=1/12. A concentration degree of (W1, W2, W5) is 1/(2+8+6)=1/16. A concentration degree of (W1, W3, W4) is 1/(4+6+2)=1/12. A concentration degree of (W1, W3, W5) is 1/(4+8+4)=1/16. A concentration degree of (W1, W4, W5) is 1/(6+8+2)=1/16. A concentration degree of (W2, W3, W4) is 1/(2+4+2)=1/8. A concentration degree of (W2, W3, W5) is 1/(2+6+4)=1/12. A concentration degree of (W2, W4, W5) is 1/(4+6+2)=1/12. A concentration degree of (W3, W4, W5) is 1/(2+4+2)=1/8.

After the sum and the concentration degree of the plurality of candidate subnetwork combinations are determined, in operation 1940, a target subnetwork combination is determined from the plurality of candidate subnetwork combinations as the second quantity of target qubit cell subnetworks for the second quantity of target quantum computing tasks based on the sum and the concentration degree of the plurality of candidate subnetwork combinations.

In an embodiment, operation 1940 includes:
determining a third score based on the sum of each candidate subnetwork combination;
determining a fourth score based on the concentration degree of each candidate subnetwork combination;
determining a total score of each candidate subnetwork combination based on the third score and the fourth score; and
determining the target subnetwork combination based on the total score of the plurality of candidate subnetwork combinations.

In the embodiment, a larger sum of a candidate subnetwork combination indicates a higher third score. A higher concentration degree of a candidate subnetwork combination indicates a higher fourth score. The total score of a candidate subnetwork combination may be determined by calculating the average or the weighted average of the third score and the fourth score. The target qubit cell subnetwork is determined based on the total score of the plurality of candidate subnetwork combinations. The total scores of the plurality of candidate subnetwork combinations may be arranged in order of magnitude, and the candidate subnetwork combination corresponding to a maximum total score is selected from a result of the arrangement as the target qubit cell subnetwork. Alternatively, the plurality of total scores are compared with a second threshold, and any one of the plurality of candidate subnetwork combinations whose total score is greater than the second threshold is selected as the target subnetwork combination.

An advantage of the embodiment of operations 1910-1940 is that, based on the sum and the concentration degree of the overall operation fidelities, the accuracy of determining the second quantity of target qubit cell subnetworks for the second quantity of associated target quantum computing tasks is improved.

### Implementation details of a method for virtualizing a quantum hardware resource according to an embodiment of the present disclosure

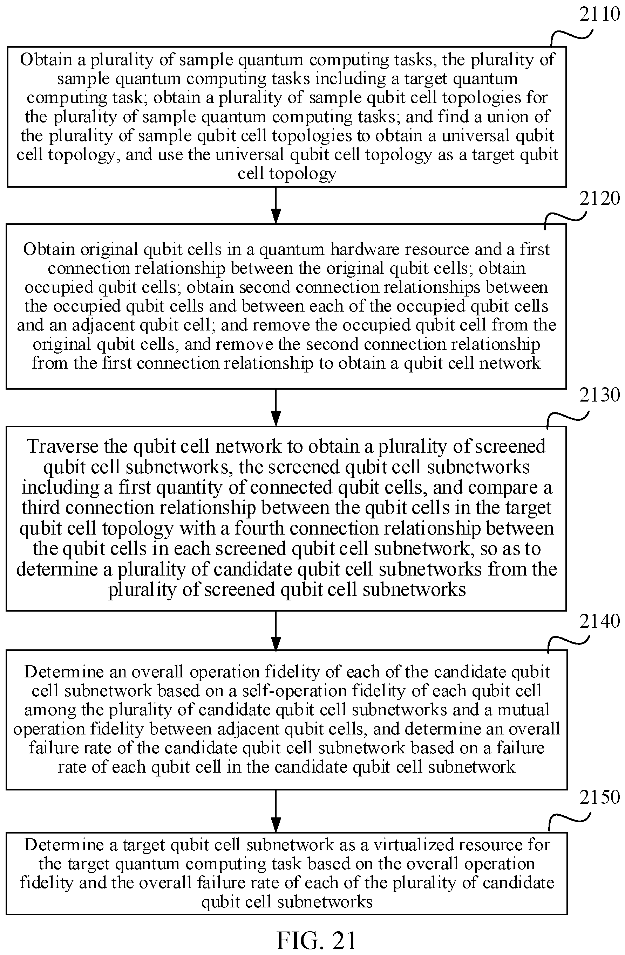

Implementation details of a method for virtualizing a quantum hardware resource in detail according to an embodiment of the present disclosure are illustrated in detail with reference to FIG. 21 below.

Operation 2110: Obtain a plurality of sample quantum computing tasks, the plurality of sample quantum computing tasks including a target quantum computing task; obtain a plurality of sample qubit cell topologies for the plurality of sample quantum computing tasks; and find a union of the plurality of sample qubit cell topologies to obtain a universal qubit cell topology, and use the universal qubit cell topology as a target qubit cell topology.

At 2120: Obtain original qubit cells in the quantum hardware resource and a first connection relationship between the original qubit cells; obtain occupied qubit cells; obtain second connection relationships between the occupied qubit cells and between each of the occupied qubit cells and an adjacent qubit cell; and remove the occupied qubit cell from the original qubit cells, and remove the second connection relationship from the first connection relationship to obtain a qubit cell network.

At 2130: Traverse the qubit cell network to obtain a plurality of screened qubit cell subnetworks, the screened qubit cell subnetworks including a first quantity of connected qubit cells; and compare a third connection relationship between the qubit cells in the target qubit cell topology with a fourth connection relationship between the qubit cells in each of the screened qubit cell subnetworks, so as to determine the plurality of candidate qubit cell subnetworks from the plurality of screened qubit cell subnetworks.

At 2140: Determine an overall operation fidelity of each candidate qubit cell subnetwork based on a self-operation fidelity of each qubit cell in each candidate qubit cell subnetwork and a mutual operation fidelity between the adjacent qubit cells; and determine an overall failure rate of each candidate qubit cell subnetwork based on a failure rate of each qubit cell in each candidate qubit cell subnetwork.

At 2150: Determine the target qubit cell subnetwork based on the overall operation fidelity and the overall failure rate of the plurality of candidate qubit cell subnetworks, the target qubit cell subnetwork serving as a virtualized resource for the target quantum computing task.

An advantage of operations 2110-2150 includes, but is not limited to, a lowest probability that the overall calculation result generated by the target qubit cell subnetwork is inconsistent with a calculation result that the target quantum computing task is to have, i.e., a minimum degree of distortion. The virtualized quantum hardware resource is partitioned in this way, so as to reduce a possibility of resource wastes, thereby improving efficiency of resource utilization and ensuring the operation effect.

### Description of an apparatus and a device of embodiments of the present disclosure

In various specific implementations of the present disclosure, permission or consent of an object is obtained first when it comes to a need to perform related processing according to data related to object characteristics such as object attribute information or attribute information collection. In addition, collection, use, and processing of such data comply with relevant laws, regulations, and standards. Moreover, when the object attribute information needs to be obtained in the embodiments of the present disclosure, separate permission or separate consent of the object is obtained through a pop-up window or by jumping to a confirmation page. After the separate permission or the separate consent of the object is explicitly obtained, necessary object-related data for enabling the embodiments of the present disclosure to normally operate is obtained.

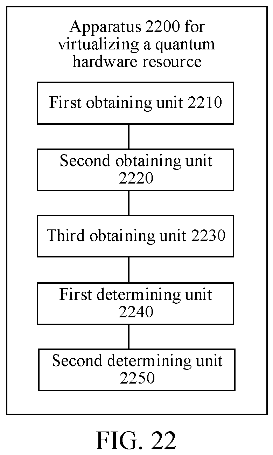

FIG. 22 is a schematic structural diagram of an apparatus 2200 for virtualizing a quantum hardware resource according to an embodiment of the present disclosure. The apparatus 2200 for virtualizing a quantum hardware resource includes:
a first obtaining unit 2210, configured to obtain a target qubit cell topology for a target quantum computing task;
a second obtaining unit 2220, configured to obtain a qubit cell network in the quantum hardware resource;
a third obtaining unit 2230, configured to obtain, from the qubit cell network, a plurality of candidate qubit cell subnetworks conforming to the target qubit cell topology;
a first determining unit 2240, configured to determine an overall operation fidelity of the candidate qubit cell subnetwork based on a self-operation fidelity of each qubit cell in the candidate qubit cell subnetwork and a mutual operation fidelity between adjacent qubit cells; and
a second determining unit 2250, configured to determine a target qubit cell subnetwork based on the overall operation fidelity of each of the plurality of candidate qubit cell subnetworks, the target qubit cell subnetwork serving as a virtualized resource for the target quantum computing task.

In some embodiments, the first determining unit 2240 is further configured to:
obtain a first weight of the self-operation fidelity and a second weight of the mutual operation fidelity; and
calculate a weighted sum of the self-operation fidelity and the mutual operation fidelity based on the first weight and the second weight, to obtain the overall operation fidelity.

In some embodiments, the first determining unit 2240 is further configured to:
obtain a task type of the target quantum computing task; and
search, based on the task type, a preset mapping relationship between task types and weights to obtain the first weight and the second weight.

In some embodiments, the target qubit cell topology is a universal qubit cell topology. The first obtaining unit 2210 is further configured to:
obtain a plurality of sample quantum computing tasks, the plurality of sample quantum computing tasks including the target quantum computing task;
obtain a plurality of sample qubit cell topologies for the plurality of sample quantum computing tasks; and
find a union of the plurality of sample qubit cell topologies to obtain the universal qubit cell topology.

In some embodiments, the second obtaining unit 2220 is further configured to:
obtain original qubit cells in the quantum hardware resource and a first connection relationship between the original qubit cells;
obtain occupied qubit cells;
obtain second connection relationships between the occupied qubit cells and between each of the occupied qubit cells and an adjacent qubit cell; and
remove the occupied qubit cell from the original qubit cells, and remove the second connection relationship from the first connection relationship to obtain a qubit cell network.

In some embodiments, the target qubit cell topology includes a first quantity of qubit cells. The third obtaining unit 2230 is further configured to:
traverse the qubit cell network to obtain a plurality of screened qubit cell subnetworks, the screened qubit cell subnetworks including a first quantity of connected qubit cells; and
compare a third connection relationship between the qubit cells in the target qubit cell topology with a fourth connection relationship between the qubit cells in each of the screened qubit cell subnetworks, so as to determine the plurality of candidate qubit cell subnetworks from the plurality of screened qubit cell subnetworks.

In some embodiments, the second determining unit 2250 is further configured to:
determine an overall failure rate of each candidate qubit cell subnetwork based on a failure rate of each qubit cell in each candidate qubit cell subnetwork; and
determine the target qubit cell subnetwork based on the overall operation fidelity and the overall failure rate of the plurality of candidate qubit cell subnetworks.

In some embodiments, the second determining unit 2250 is further configured to:
obtain an importance degree of the target quantum computing task;
determine a fidelity level corresponding to the importance degree; and
determine, as the target qubit cell subnetwork, the candidate qubit cell subnetwork whose overall operation fidelity belongs to the fidelity level among the plurality of candidate qubit cell subnetworks.

In some embodiments, a second quantity of target quantum computing tasks are provided, and a third quantity of candidate qubit cell subnetworks are provided, the second quantity being less than the third quantity. The second determining unit 2250 is further configured to:
arrange the third quantity of candidate qubit cell subnetworks into a sequence in descending order based on the overall operation fidelity; and
determine a second quantity of top candidate qubit cell subnetworks in the sequence as a second quantity of target qubit cell subnetworks for the second quantity of target quantum computing tasks.

In some embodiments, the target quantum computing task is a second quantity of associated target quantum computing tasks, and the candidate qubit cell subnetwork is a third quantity of candidate qubit cell subnetworks, the second quantity being less than the third quantity.

In some embodiments, the second determining unit 2250 is further configured to:
traverse the third quantity of candidate qubit cell subnetworks to obtain a plurality of candidate subnetwork combinations, each of the candidate subnetwork combinations including a second quantity of candidate qubit cell subnetworks;
determine a sum of the overall operation fidelities of the second quantity of candidate qubit cell subnetworks in the candidate subnetwork combination;
determine a concentration degree of the second quantity of candidate qubit cell subnetworks in the candidate subnetwork combination; and
determine, as a second quantity of target qubit cell subnetworks for the second quantity of target quantum computing tasks, a target subnetwork combination from the plurality of candidate subnetwork combinations based on the sum of the overall operation fidelities of the plurality of candidate subnetwork combinations and the concentration degree.

In some embodiments, the second determining unit 2250 is further configured to:
determine a center point distance between every two of the second quantity of candidate qubit cell subnetworks in the candidate subnetwork combination; and
determine a reciprocal of an average distance of the center point distances as the concentration degree of the second quantity of candidate qubit cell subnetworks.

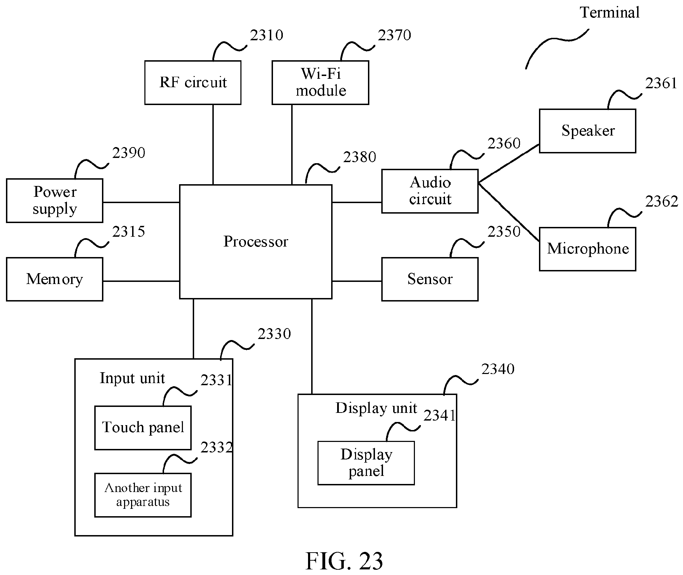

FIG. 23 is a structural block diagram of a part of a terminal that implements a method for virtualizing a quantum hardware resource according to an embodiment of the present disclosure. The terminal includes components such as an RF circuit 2310, a memory 2315, an input unit 2330, a display unit 2340, a sensor 2350, an audio circuit 2360, a wireless fidelity (Wi-Fi) module 2370, a processor 2380, and a power supply 2390. A person skilled in the art may understand that the terminal structure shown in FIG. 23 does not constitute a limitation on a mobile phone or a computer, and the mobile phone or the computer may include more or fewer components than those shown in the figure, or some merged components, or different component arrangements.

The RF circuit 2310 may be configured to receive and transmit signals during information receiving and transmission or a call. Specifically, the RF circuit receives downlink information from a base station, and then delivers the downlink information to the processor 2380 for processing. In addition, the RF circuit transmits uplink data to the base station.

The memory 2315 may be configured to store a software program and a module, and the processor 2380 executes various function applications of the terminal and performs data processing by running the software program and the module stored in the memory 2315.

The input unit 2330 may be configured to receive an inputted digit or character information, and generate key signal inputs related to settings and function control of the terminal. Specifically, the input unit 2330 may include a touch panel 2331 and another input apparatus 2332.

The display unit 2340 may be configured to display inputted information or provided information and various menus of the terminal. The display unit 2340 may include a display panel 2341.

The audio circuit 2360, a speaker 2361, and a microphone 2362 may provide audio interfaces.

In this embodiment, the processor 2380 included in the terminal may perform the method for virtualizing a quantum hardware resource of the previous embodiment.

The terminal of the embodiment of the present disclosure includes but is not limited to a mobile phone, a computer, an intelligent voice interaction device, a smart home appliance, an on-board terminal, an aircraft, and the like. The embodiment of the present disclosure may be applied to various scenarios, including but not limited to quantum computing, distributed quantum computing, superconducting quantum computing, and the like.

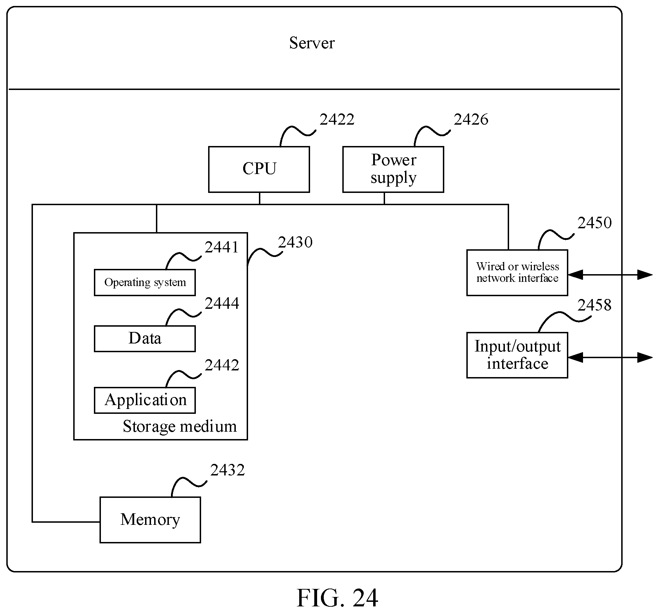

FIG. 24 is a structural block diagram of a part of a server that implements the method for virtualizing a quantum hardware resource according to an embodiment of the present disclosure. The server may vary greatly due to different configurations or performance, and may include one or more central processing units (CPUs) 2422 (for example, one or more processors) and a memory 2432, and one or more storage media 2430 (for example, one or more mass storage apparatus) that store application programs 2442 or data 2444. The memory 2432 and the storage medium 2430 may provide transitory storage or persistent storage. A program stored in the storage medium 2430 may include one or more modules (which are not marked in the figure), and each module may include a series of instruction operations on a server 2400. Further, the CPUs 2422 may be configured to communicate with the storage medium 2430, and perform, on the server 2400, the series of instruction operations in the storage medium 2430.

The server 2400 may further include one or more power supplies 2426, one or more wired or wireless network interfaces 2450, one or more input/output interfaces 2458, and/or one or more operating systems 2441 such as Windows ServerTM, Mac OS XTM, UnixTM, LinuxTM, or FreeBSDTM.

The processor in the server 2400 may be configured to perform the method for virtualizing a quantum hardware resource of the embodiments of the present disclosure.

An embodiment of the present disclosure further provides a computer-readable storage medium, configured to store program code, the program code being configured for performing the method for virtualizing a quantum hardware resource of the foregoing embodiments.

An embodiment of that present disclosure further provides a computer program product, including a computer program. The processor of the computer device reads and executes the computer program, so that the computer device performs and implements the method for virtualizing a quantum hardware resource described above.

The terms "first", "second", "third", "fourth", and the like (if any) in the specification of the present disclosure and the foregoing accompanying drawings are used for distinguishing similar objects, and are not necessarily used for describing a particular sequence or order. Data used in this way may be transposed where appropriate, so that the embodiments of the present disclosure described herein can be, for example, implemented in an order different from those illustrated or described herein. In addition, the terms "comprise", "include", and any of their variants are intended to cover non-exclusive inclusion. For example, a process, a method, a system, a product, or an apparatus that includes a series of operations or units is not necessarily limited to that expressly listed operations or units, but may include other operations or units not expressly listed or inherent to the process, the method, the product, or the apparatus.

In the present disclosure, "at least one" means one or more, and "a plurality of" means two or more. The term "and/or" is used for describing an association relationship between associated objects and representing that three relationships may exist. For example, "A and/or B" may represent the following three cases: only A exists, only B exists, and both A and B exist, where A and B may be singular or plural. The character "/" generally indicates an "or" relationship between a preceding associated object and a latter associated object. "At least one of the following items (pieces)" or a similar expression thereof refers to any combination of these items, including any combination of singular items (pieces) or plural items (pieces). For example, at least one of a, b, or c may represent: a, b, c, "a and b", "a and c", "b and c", or "a, b, and c", where a, b, and c may be singular or plural.

In the description of the embodiments of the present disclosure, a plurality of pieces (a plurality of items) mean more than two, greater than, less than, exceeding, and the like are understood as excluding this number, and above, below, within, and the like are understood as including this number.

The disclosed system, apparatus, and method in the several embodiments provided in the present disclosure may be implemented in other manners. For example, the apparatus embodiments described above are merely examples. For example, division of units is merely logical function division and may be another division manner during actual implementation. For example, a plurality of units or components may be combined or integrated into another system, or some features may be omitted or not executed. In addition, the displayed or discussed mutual coupling or direct coupling or communication connection may be implemented through some interfaces. Indirect coupling or communication connection between the apparatuses or units may be implemented in electronic, mechanical, or other forms.

The units described as separate components may or may not be physically separated, and the components displayed as units may or may not be physical units, which may be located in one place, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit. The integrated unit may be implemented in the form of hardware, or may be implemented in the form of a software function unit.

When the integrated unit is implemented in the form of a software functional unit and sold or used as an independent product, the integrated unit may be stored in a computer-readable storage medium. Based on such an understanding, the technical solutions of the present disclosure essentially, or a part contributing to the related art, or all or a part of the technical solutions may be implemented in the form of a software product. The computer software product is stored in a storage medium, and includes a plurality of instructions for enabling a computer apparatus (which may be a personal computer, a server, a network apparatus, or the like) to perform all or a part of the operations of the method in the embodiments of the present disclosure. The foregoing storage medium includes various media that may store program code, such as a USB flash disk, a mobile hard disk, a read-only memory (ROM), a random access memory (RAM), a magnetic disk, or a compact disc.

Various implementations provided in the embodiments of the present disclosure may be combined arbitrarily to achieve different technical effects.

The above is a specific description of the implementations of the present disclosure, but the present disclosure is not limited to the foregoing implementations.

## Claims

1. A computer-implemented method for determining a qubit cell network for a quantum computing task, comprising:
obtaining (310) a qubit cell topology for a quantum computing task;
obtaining (320) a qubit cell network in a quantum hardware resource;
obtaining (330), from the qubit cell network, a plurality of candidate qubit cell subnetworks conforming to the qubit cell topology; **characterized by**,
for each of the plurality of candidate qubit cell subnetworks, determining (340) an operation fidelity of the respective candidate qubit cell subnetwork using a self-operation fidelity of each qubit cell in the respective candidate qubit cell subnetwork and a mutual operation fidelity between adjacent qubit cells in the respective candidate qubit cell subnetwork, and determining a failure rate of the respective candidate qubit cell subnetwork using a failure rate of each qubit cell in the respective candidate qubit cell subnetwork; and
determining (350) a qubit cell subnetwork using the operation fidelity of each of the plurality of candidate qubit cell subnetworks, wherein the qubit cell subnetwork is used for executing the quantum computing task, wherein the determining (350) a qubit cell subnetwork comprises:
determining (1320) the qubit cell subnetwork using operation fidelities and failure rates of the plurality of candidate qubit cell subnetworks.

2. The method of claim 1, wherein for each of the plurality of candidate qubit cell subnetworks, determining (340) the operation fidelity of the respective candidate qubit cell subnetwork using the self-operation fidelity of each qubit cell in the respective candidate qubit cell subnetwork and the mutual operation fidelity between adjacent qubit cells in the respective candidate qubit cell subnetwork comprises:
obtaining (1110) a first weight of the self-operation fidelity and a second weight of the mutual operation fidelity; and
calculating (1120) a weighted sum of the self-operation fidelity and the mutual operation fidelity using the first weight and the second weight, to obtain the operation fidelity of the respective candidate qubit cell subnetwork.

3. The method of claim 2, wherein obtaining (1110) the first weight of the self-operation fidelity and the second weight of the mutual operation fidelity comprises:
obtaining a task type of the quantum computing task; and
searching, using the task type, a preset mapping relationship between task types and weights to obtain the first weight and the second weight.

4. The method of any one of claims 1 to 3, wherein the qubit cell topology is a universal qubit cell topology; and
wherein obtaining (310) the qubit cell topology for the quantum computing task comprises:
obtaining (510) a plurality of sample quantum computing tasks comprising the quantum computing task;
obtaining (520) a plurality of sample qubit cell topologies for the plurality of sample quantum computing tasks; and
determining (530) a union of the plurality of sample qubit cell topologies as the universal qubit cell topology.

5. The method of any one of claims 1 to 4, wherein obtaining (320) the qubit cell network in the quantum hardware resource comprises:
obtaining (710) original qubit cells in the quantum hardware resource and a first connection relationship between the original qubit cells;
obtaining (720) occupied qubit cells;
obtaining (730) second connection relationships between the occupied qubit cells and between each of the occupied qubit cells and qubit cells adjacent to the occupied qubit cell; and
removing (740) the occupied qubit cells from the original qubit cells, and removing the second connection relationship from the first connection relationship to obtain the qubit cell network.

6. The method of any one of claims 1 to 5, wherein the qubit cell topology comprises a first quantity of qubit cells; and
wherein obtaining (330), from the qubit cell network, the plurality of candidate qubit cell subnetworks conforming to the qubit cell topology comprises:
traversing (910) the qubit cell network to obtain a plurality of screened qubit cell subnetworks, the screened qubit cell subnetworks comprising a first quantity of connected qubit cells; and
determining (920) the plurality of candidate qubit cell subnetworks from the plurality of screened qubit cell subnetworks by comparing a third connection relationship between the qubit cells in the qubit cell topology with a fourth connection relationship between the qubit cells in each of the plurality of screened qubit cell subnetworks.

7. The method of any one of claims 1 to 6, wherein determining (350) the qubit cell subnetwork using the operation fidelity of each of the plurality of candidate qubit cell subnetworks further comprises:
obtaining (1510) an importance degree of the quantum computing task;
determining (1520) a fidelity level corresponding to the importance degree; and
determining (1530), as the qubit cell subnetwork, a candidate qubit cell subnetwork whose operation fidelity belongs to the fidelity level among the plurality of candidate qubit cell subnetworks.

8. The method of any one of claims 1 to 6, wherein a second quantity of quantum computing tasks are provided, and a third quantity of candidate qubit cell subnetworks are provided, the second quantity being less than the third quantity; and
wherein determining (350) the qubit cell subnetwork using the operation fidelity of each of the plurality of candidate qubit cell subnetworks further comprises:
arranging (1710) the third quantity of candidate qubit cell subnetworks into a sequence in descending order of operation fidelities; and
determining (1720) a second quantity of top candidate qubit cell subnetworks in the sequence as a second quantity of qubit cell subnetworks for the second quantity of quantum computing tasks.

9. The method of any one of claims 1 to 6, wherein the quantum computing task is a second quantity of associated quantum computing tasks, and the candidate qubit cell subnetwork is a third quantity of candidate qubit cell subnetworks, the second quantity being less than the third quantity; and
wherein determining (350) the qubit cell subnetwork using the operation fidelity of each of the plurality of candidate qubit cell subnetworks further comprises:
traversing (1910) the third quantity of candidate qubit cell subnetworks to obtain a plurality of candidate subnetwork combinations, each of the plurality of candidate subnetwork combinations comprising a second quantity of candidate qubit cell subnetworks;
determining (1920) a sum of operation fidelities of the second quantity of candidate qubit cell subnetworks in each candidate subnetwork combination;
determining (1930) a concentration degree of the second quantity of candidate qubit cell subnetworks in each candidate subnetwork combination; and
determining (1940) a subnetwork combination from the plurality of candidate subnetwork combinations using the sum of the operation fidelities of the plurality of candidate subnetwork combinations and the concentration degree, the subnetwork combination serving as a second quantity of qubit cell subnetworks for the second quantity of quantum computing tasks.

10. The method of claim 9, wherein determining (1930) the concentration degree of the second quantity of candidate qubit cell subnetworks in the candidate subnetwork combination comprises:
determining a center point distance between every two of the second quantity of candidate qubit cell subnetworks in the candidate subnetwork combination; and
determining a reciprocal of an average distance of the center point distances as the concentration degree of the second quantity of candidate qubit cell subnetworks.

11. An electronic device, comprising a memory and a processor, the memory having a computer program stored therein which, when executed by the processor, causes the processor to perform the method for determining a qubit cell network for a quantum computing task of any one of claims 1 to 10.

12. A computer-readable storage medium having stored therein a computer program which, when executed by a processor, causes the processor to perform the method for determining a qubit cell network for a quantum computing task of any one of claims 1 to 10.

13. A computer program product, comprising a computer program, the computer program being read and executed by a processor of a computer device, causing the computer device to perform the method for determining a qubit cell network for a quantum computing task of any one of claims 1 to 10.

## Patentansprüche

1. Ein computerimplementiertes Verfahren zum Bestimmen eines Qubit-Zellennetzwerks für eine Quantenberechnungsaufgabe, umfassend:
Erhalten (310) einer Qubit-Zellentopologie für eine Quantenberechnungsaufgabe;
Erhalten (320) eines Qubit-Zellennetzwerks in einer Quantenhardware-Ressource;
Erhalten (330), aus dem Qubit-Zellennetzwerk, einer Vielzahl von Kandidaten-Qubit-Zellenteilnetzwerken, die der Qubit-Zellentopologie entsprechen; **gekennzeichnet durch**,
für jedes der Vielzahl von Kandidaten-Qubit-Zellenteilnetzwerken, Bestimmen (340) einer Operationsfidelität des jeweiligen Kandidaten-Qubit-Zellenteilnetzwerks unter Verwendung einer Eigenoperationsfidelität jeder Qubit-Zelle in dem jeweiligen Kandidaten-Qubit-Zellenteilnetzwerk und einer gegenseitigen Operationsfidelität zwischen benachbarten Qubit-Zellen in dem jeweiligen Kandidaten-Qubit-Zellenteilnetzwerk, und Bestimmen einer Ausfallrate des jeweiligen Kandidaten-Qubit-Zellenteilnetzwerks unter Verwendung einer Ausfallrate jeder Qubit-Zelle in dem jeweiligen Kandidaten-Qubit-Zellenteilnetzwerk; und
Bestimmen (350) eines Qubit-Zellenteilnetzwerks unter Verwendung der Operationsfidelität jedes der Vielzahl von Kandidaten-Qubit-Zellenteilnetzwerken, wobei das Qubit-Zellenteilnetzwerk zum Ausführen der Quantenberechnungsaufgabe verwendet wird, wobei das Bestimmen (350) eines Qubit-Zellenteilnetzwerks umfasst:
Bestimmen (1320) des Qubit-Zellenteilnetzwerks unter Verwendung von Operationsfidelitäten und Ausfallraten der Vielzahl von Kandidaten-Qubit-Zellenteilnetzwerken.

2. Das Verfahren nach Anspruch 1, wobei für jedes der Vielzahl von Kandidaten-Qubit-Zellenteilnetzwerken das Bestimmen (340) der Operationsfidelität des jeweiligen Kandidaten-Qubit-Zellenteilnetzwerks unter Verwendung der Eigenoperationsfidelität jeder Qubit-Zelle in dem jeweiligen Kandidaten-Qubit-Zellenteilnetzwerk und der gegenseitigen Operationsfidelität zwischen benachbarten Qubit-Zellen in dem jeweiligen Kandidaten-Qubit-Zellenteilnetzwerk umfasst:
Erhalten (1110) eines ersten Gewichts der Eigenoperationsfidelität und eines zweiten Gewichts der gegenseitigen Operationsfidelität; und
Berechnen (1120) einer gewichteten Summe der Eigenoperationsfidelität und der gegenseitigen Operationsfidelität unter Verwendung des ersten Gewichts und des zweiten Gewichts, um die Operationsfidelität des jeweiligen Kandidaten-Qubit-Zellenteilnetzwerks zu erhalten.

3. Das Verfahren nach Anspruch 2, wobei das Erhalten (1110) des ersten Gewichts der Eigenoperationsfidelität und des zweiten Gewichts der gegenseitigen Operationsfidelität umfasst:
Erhalten eines Aufgabentyps der Quantenberechnungsaufgabe; und
Suchen, unter Verwendung des Aufgabentyps, einer voreingestellten Abbildungsbeziehung zwischen Aufgabentypen und Gewichten, um das erste Gewicht und das zweite Gewicht zu erhalten.

4. Das Verfahren nach einem der Ansprüche 1 bis 3, wobei die Qubit-Zellentopologie eine universelle Qubit-Zellentopologie ist; und
wobei das Erhalten (310) der Qubit-Zellentopologie für die Quantenberechnungsaufgabe umfasst:
Erhalten (510) einer Vielzahl von Beispiel-Quantenberechnungsaufgaben, welche die Quantenberechnungsaufgabe umfassen;
Erhalten (520) einer Vielzahl von Beispiel-Qubit-Zellentopologien für die Vielzahl von Beispiel-Quantenberechnungsaufgaben; und
Bestimmen (530) einer Vereinigung der Vielzahl von Beispiel-Qubit-Zellentopologien als die universelle Qubit-Zellentopologie.

5. Das Verfahren nach einem der Ansprüche 1 bis 4, wobei das Erhalten (320) des Qubit-Zellennetzwerks in der Quantenhardware-Ressource umfasst:
Erhalten (710) ursprünglicher Qubit-Zellen in der Quantenhardware-Ressource und einer ersten Verbindungsbeziehung zwischen den ursprünglichen Qubit-Zellen;
Erhalten (720) belegter Qubit-Zellen;
Erhalten (730) zweiter Verbindungsbeziehungen zwischen den belegten Qubit-Zellen und zwischen jeder der belegten Qubit-Zellen und Qubit-Zellen, die zu der belegten Qubit-Zelle benachbart sind; und
Entfernen (740) der belegten Qubit-Zellen aus den ursprünglichen Qubit-Zellen und Entfernen der zweiten Verbindungsbeziehung aus der ersten Verbindungsbeziehung, um das Qubit-Zellennetzwerk zu erhalten.

6. Das Verfahren nach einem der Ansprüche 1 bis 5, wobei die Qubit-Zellentopologie eine erste Anzahl von Qubit-Zellen umfasst; und
wobei das Erhalten (330), aus dem Qubit-Zellennetzwerk, der Vielzahl von Kandidaten-Qubit-Zellenteilnetzwerken, die der Qubit-Zellentopologie entsprechen, umfasst:
Durchlaufen (910) des Qubit-Zellennetzwerks, um eine Vielzahl von ausgesiebten Qubit-Zellenteilnetzwerken zu erhalten, wobei die ausgesiebten Qubit-Zellenteilnetzwerke eine erste Anzahl von verbundenen Qubit-Zellen umfassen; und
Bestimmen (920) der Vielzahl von Kandidaten-Qubit-Zellenteilnetzwerken aus der Vielzahl von ausgesiebten Qubit-Zellenteilnetzwerken durch Vergleichen einer dritten Verbindungsbeziehung zwischen den Qubit-Zellen in der Qubit-Zellentopologie mit einer vierten Verbindungsbeziehung zwischen den Qubit-Zellen in jedem der Vielzahl von ausgesiebten Qubit-Zellenteilnetzwerken.

7. Das Verfahren nach einem der Ansprüche 1 bis 6, wobei das Bestimmen (350) des Qubit-Zellenteilnetzwerks unter Verwendung der Operationsfidelität jedes der Vielzahl von Kandidaten-Qubit-Zellenteilnetzwerken ferner umfasst:
Erhalten (1510) eines Wichtigkeitsgrads der Quantenberechnungsaufgabe;
Bestimmen (1520) einer Fidelitätsstufe, die dem Wichtigkeitsgrad entspricht; und
Bestimmen (1530), als das Qubit-Zellenteilnetzwerk, eines Kandidaten-Qubit-Zellenteilnetzwerks, dessen Operationsfidelität zu der Fidelitätsstufe gehört, aus der Vielzahl von Kandidaten-Qubit-Zellenteilnetzwerken.

8. Das Verfahren nach einem der Ansprüche 1 bis 6, wobei eine zweite Anzahl von Quantenberechnungsaufgaben bereitgestellt ist und eine dritte Anzahl von Kandidaten-Qubit-Zellenteilnetzwerken bereitgestellt ist, wobei die zweite Anzahl kleiner als die dritte Anzahl ist; und
wobei das Bestimmen (350) des Qubit-Zellenteilnetzwerks unter Verwendung der Operationsfidelität jedes der Vielzahl von Kandidaten-Qubit-Zellenteilnetzwerken ferner umfasst:
Anordnen (1710) der dritten Anzahl von Kandidaten-Qubit-Zellenteilnetzwerken in einer Sequenz in absteigender Reihenfolge der Operationsfidelitäten; und
Bestimmen (1720) einer zweiten Anzahl von obersten Kandidaten-Qubit-Zellenteilnetzwerken in der Sequenz als eine zweite Anzahl von Qubit-Zellenteilnetzwerken für die zweite Anzahl von Quantenberechnungsaufgaben.

9. Das Verfahren nach einem der Ansprüche 1 bis 6, wobei die Quantenberechnungsaufgabe eine zweite Anzahl von zugehörigen Quantenberechnungsaufgaben ist und das Kandidaten-Qubit-Zellenteilnetzwerk eine dritte Anzahl von Kandidaten-Qubit-Zellenteilnetzwerken ist, wobei die zweite Anzahl kleiner als die dritte Anzahl ist; und
wobei das Bestimmen (350) des Qubit-Zellenteilnetzwerks unter Verwendung der Operationsfidelität jedes der Vielzahl von Kandidaten-Qubit-Zellenteilnetzwerken ferner umfasst:
Durchlaufen (1910) der dritten Anzahl von Kandidaten-Qubit-Zellenteilnetzwerken, um eine Vielzahl von Kandidaten-Teilnetzwerkkombinationen zu erhalten, wobei jede der Vielzahl von Kandidaten-Teilnetzwerkkombinationen eine zweite Anzahl von Kandidaten-Qubit-Zellenteilnetzwerken umfasst;
Bestimmen (1920) einer Summe von Operationsfidelitäten der zweiten Anzahl von Kandidaten-Qubit-Zellenteilnetzwerken in jeder Kandidaten-Teilnetzwerkkombination;
Bestimmen (1930) eines Konzentrationsgrads der zweiten Anzahl von Kandidaten-Qubit-Zellenteilnetzwerken in jeder Kandidaten-Teilnetzwerkkombination; und
Bestimmen (1940) einer Teilnetzwerkkombination aus der Vielzahl von Kandidaten-Teilnetzwerkkombinationen unter Verwendung der Summe der Operationsfidelitäten der Vielzahl von Kandidaten-Teilnetzwerkkombinationen und des Konzentrationsgrads, wobei die Teilnetzwerkkombination als eine zweite Anzahl von Qubit-Zellenteilnetzwerken für die zweite Anzahl von Quantenberechnungsaufgaben dient.

10. Das Verfahren nach Anspruch 9, wobei das Bestimmen (1930) des Konzentrationsgrads der zweiten Anzahl von Kandidaten-Qubit-Zellenteilnetzwerken in der Kandidaten-Teilnetzwerkkombination umfasst:
Bestimmen eines Mittelpunktabstands zwischen jeweils zwei der zweiten Anzahl von Kandidaten-Qubit-Zellenteilnetzwerken in der Kandidaten-Teilnetzwerkkombination; und
Bestimmen eines Kehrwerts eines Durchschnittsabstands der Mittelpunktabstände als den Konzentrationsgrad der zweiten Anzahl von Kandidaten-Qubit-Zellenteilnetzwerken.

11. Eine elektronische Vorrichtung, umfassend einen Speicher und einen Prozessor, wobei der Speicher ein darin gespeichertes Computerprogramm aufweist, das, wenn es durch den Prozessor ausgeführt wird, den Prozessor veranlasst, das Verfahren zum Bestimmen eines Qubit-Zellennetzwerks für eine Quantenberechnungsaufgabe nach einem der Ansprüche 1 bis 10 durchzuführen.

12. Ein computerlesbares Speichermedium, in dem ein Computerprogramm gespeichert ist, das, wenn es durch einen Prozessor ausgeführt wird, den Prozessor veranlasst, das Verfahren zum Bestimmen eines Qubit-Zellennetzwerks für eine Quantenberechnungsaufgabe nach einem der Ansprüche 1 bis 10 durchzuführen.

13. Ein Computerprogrammprodukt, umfassend ein Computerprogramm, wobei das Computerprogramm durch einen Prozessor einer Computervorrichtung gelesen und ausgeführt wird, wodurch die Computervorrichtung veranlasst wird, das Verfahren zum Bestimmen eines Qubit-Zellennetzwerks für eine Quantenberechnungsaufgabe nach einem der Ansprüche 1 bis 10 durchzuführen.

## Revendications

1. Un procédé mis en œuvre par ordinateur pour déterminer un réseau de cellules de qubit pour une tâche de calcul quantique, comprenant :
obtenir (310) une topologie de cellules de qubit pour une tâche de calcul quantique ;
obtenir (320) un réseau de cellules de qubit dans une ressource matérielle quantique ;
obtenir (330), à partir du réseau de cellules de qubit, une pluralité de sous-réseaux de cellules de qubit candidats conformes à la topologie de cellules de qubit ; **caractérisé par**,
pour chacun de la pluralité de sous-réseaux de cellules de qubit candidats, déterminer (340) une fidélité d'opération du sous-réseau de cellules de qubit candidat respectif en utilisant une fidélité d'auto-opération de chaque cellule de qubit dans le sous-réseau de cellules de qubit candidat respectif et une fidélité d'opération mutuelle entre des cellules de qubit adjacentes dans le sous-réseau de cellules de qubit candidat respectif, et déterminer un taux de défaillance du sous-réseau de cellules de qubit candidat respectif en utilisant un taux de défaillance de chaque cellule de qubit dans le sous-réseau de cellules de qubit candidat respectif ; et
déterminer (350) un sous-réseau de cellules de qubit en utilisant la fidélité d'opération de chacun de la pluralité de sous-réseaux de cellules de qubit candidats, dans lequel le sous-réseau de cellules de qubit est utilisé pour exécuter la tâche de calcul quantique, dans lequel la détermination (350) d'un sous-réseau de cellules de qubit comprend :
déterminer (1320) le sous-réseau de cellules de qubit en utilisant des fidélités d'opération et des taux de défaillance de la pluralité de sous-réseaux de cellules de qubit candidats.

2. Le procédé selon la revendication 1, dans lequel, pour chacun de la pluralité de sous-réseaux de cellules de qubit candidats, la détermination (340) de la fidélité d'opération du sous-réseau de cellules de qubit candidat respectif en utilisant la fidélité d'auto-opération de chaque cellule de qubit dans le sous-réseau de cellules de qubit candidat respectif et la fidélité d'opération mutuelle entre des cellules de qubit adjacentes dans le sous-réseau de cellules de qubit candidat respectif comprend :
obtenir (1110) un premier poids de la fidélité d'auto-opération et un deuxième poids de la fidélité d'opération mutuelle ; et
calculer (1120) une somme pondérée de la fidélité d'auto-opération et de la fidélité d'opération mutuelle en utilisant le premier poids et le deuxième poids, pour obtenir la fidélité d'opération du sous-réseau de cellules de qubit candidat respectif.

3. Le procédé selon la revendication 2, dans lequel l'obtention (1110) du premier poids de la fidélité d'auto-opération et du deuxième poids de la fidélité d'opération mutuelle comprend :
obtenir un type de tâche de la tâche de calcul quantique ; et
rechercher, en utilisant le type de tâche, une relation de correspondance prédéfinie entre des types de tâches et des poids pour obtenir le premier poids et le deuxième poids.

4. Le procédé selon l'une quelconque des revendications 1 à 3, dans lequel la topologie de cellules de qubit est une topologie universelle de cellules de qubit ; et
dans lequel l'obtention (310) de la topologie de cellules de qubit pour la tâche de calcul quantique comprend :
obtenir (510) une pluralité de tâches de calcul quantique d'échantillon comprenant la tâche de calcul quantique ;
obtenir (520) une pluralité de topologies de cellules de qubit d'échantillon pour la pluralité de tâches de calcul quantique d'échantillon ; et
déterminer (530) une union de la pluralité de topologies de cellules de qubit d'échantillon comme étant la topologie universelle de cellules de qubit.

5. Le procédé selon l'une quelconque des revendications 1 à 4, dans lequel l'obtention (320) du réseau de cellules de qubit dans la ressource matérielle quantique comprend :
obtenir (710) des cellules de qubit d'origine dans la ressource matérielle quantique et une première relation de connexion entre les cellules de qubit d'origine ;
obtenir (720) des cellules de qubit occupées ;
obtenir (730) des deuxièmes relations de connexion entre les cellules de qubit occupées et entre chacune des cellules de qubit occupées et des cellules de qubit adjacentes à la cellule de qubit occupée ; et
retirer (740) les cellules de qubit occupées des cellules de qubit d'origine, et retirer la deuxième relation de connexion de la première relation de connexion pour obtenir le réseau de cellules de qubit.

6. Le procédé selon l'une quelconque des revendications 1 à 5, dans lequel la topologie de cellules de qubit comprend une première quantité de cellules de qubit ; et
dans lequel l'obtention (330), à partir du réseau de cellules de qubit, de la pluralité de sous-réseaux de cellules de qubit candidats conformes à la topologie de cellules de qubit comprend :
parcourir (910) le réseau de cellules de qubit pour obtenir une pluralité de sous-réseaux de cellules de qubit filtrés, les sous-réseaux de cellules de qubit filtrés comprenant une première quantité de cellules de qubit connectées ; et
déterminer (920) la pluralité de sous-réseaux de cellules de qubit candidats à partir de la pluralité de sous-réseaux de cellules de qubit filtrés en comparant une troisième relation de connexion entre les cellules de qubit dans la topologie de cellules de qubit avec une quatrième relation de connexion entre les cellules de qubit dans chacun de la pluralité de sous-réseaux de cellules de qubit filtrés.

7. Le procédé selon l'une quelconque des revendications 1 à 6, dans lequel la détermination (350) du sous-réseau de cellules de qubit en utilisant la fidélité d'opération de chacun de la pluralité de sous-réseaux de cellules de qubit candidats comprend en outre :
obtenir (1510) un degré d'importance de la tâche de calcul quantique ;
déterminer (1520) un niveau de fidélité correspondant au degré d'importance ; et
déterminer (1530), en tant que sous-réseau de cellules de qubit, un sous-réseau de cellules de qubit candidat dont la fidélité d'opération appartient au niveau de fidélité parmi la pluralité de sous-réseaux de cellules de qubit candidats.

8. Le procédé selon l'une quelconque des revendications 1 à 6, dans lequel une deuxième quantité de tâches de calcul quantique est fournie, et une troisième quantité de sous-réseaux de cellules de qubit candidats est fournie, la deuxième quantité étant inférieure à la troisième quantité ; et
dans lequel la détermination (350) du sous-réseau de cellules de qubit en utilisant la fidélité d'opération de chacun de la pluralité de sous-réseaux de cellules de qubit candidats comprend en outre :
agencer (1710) la troisième quantité de sous-réseaux de cellules de qubit candidats en une séquence dans l'ordre décroissant des fidélités d'opération ; et
déterminer (1720) une deuxième quantité de premiers sous-réseaux de cellules de qubit candidats dans la séquence comme étant une deuxième quantité de sous-réseaux de cellules de qubit pour la deuxième quantité de tâches de calcul quantique.

9. Le procédé selon l'une quelconque des revendications 1 à 6, dans lequel la tâche de calcul quantique est une deuxième quantité de tâches de calcul quantique associées, et le sous-réseau de cellules de qubit candidat est une troisième quantité de sous-réseaux de cellules de qubit candidats, la deuxième quantité étant inférieure à la troisième quantité ; et
dans lequel la détermination (350) du sous-réseau de cellules de qubit en utilisant la fidélité d'opération de chacun de la pluralité de sous-réseaux de cellules de qubit candidats comprend en outre :
parcourir (1910) la troisième quantité de sous-réseaux de cellules de qubit candidats pour obtenir une pluralité de combinaisons de sous-réseaux candidates, chacune de la pluralité de combinaisons de sous-réseaux candidates comprenant une deuxième quantité de sous-réseaux de cellules de qubit candidats ;
déterminer (1920) une somme de fidélités d'opération de la deuxième quantité de sous-réseaux de cellules de qubit candidats dans chaque combinaison de sous-réseaux candidate ;
déterminer (1930) un degré de concentration de la deuxième quantité de sous-réseaux de cellules de qubit candidats dans chaque combinaison de sous-réseaux candidate ; et
déterminer (1940) une combinaison de sous-réseaux parmi la pluralité de combinaisons de sous-réseaux candidates en utilisant la somme des fidélités d'opération de la pluralité de combinaisons de sous-réseaux candidates et le degré de concentration, la combinaison de sous-réseaux servant de deuxième quantité de sous-réseaux de cellules de qubit pour la deuxième quantité de tâches de calcul quantique.

10. Le procédé selon la revendication 9, dans lequel la détermination (1930) du degré de concentration de la deuxième quantité de sous-réseaux de cellules de qubit candidats dans la combinaison de sous-réseaux candidate comprend :
déterminer une distance entre points centraux entre chaque paire de la deuxième quantité de sous-réseaux de cellules de qubit candidats dans la combinaison de sous-réseaux candidate ; et
déterminer une valeur réciproque d'une distance moyenne des distances entre points centraux comme étant le degré de concentration de la deuxième quantité de sous-réseaux de cellules de qubit candidats.

11. Un dispositif électronique, comprenant une mémoire et un processeur, la mémoire ayant un programme informatique stocké dans celle-ci qui, lorsqu'il est exécuté par le processeur, amène le processeur à exécuter le procédé pour déterminer un réseau de cellules de qubit pour une tâche de calcul quantique selon l'une quelconque des revendications 1 à 10.

12. Un support de stockage lisible par ordinateur ayant stocké dans celui-ci un programme informatique qui, lorsqu'il est exécuté par un processeur, amène le processeur à exécuter le procédé pour déterminer un réseau de cellules de qubit pour une tâche de calcul quantique selon l'une quelconque des revendications 1 à 10.

13. Un produit de programme informatique, comprenant un programme informatique, le programme informatique étant lu et exécuté par un processeur d'un dispositif informatique, amenant le dispositif informatique à exécuter le procédé pour déterminer un réseau de cellules de qubit pour une tâche de calcul quantique selon l'une quelconque des revendications 1 à 10.
